# EUROPÄISCHE PATENTSCHRIFT

(11) **EP 0 539 860 B1**
(45) Veröffentlichungstag und Bekanntmachung des Hinweises auf die Patenterteilung: **05.07.1995**
(21) Anmeldenummer: 92118023.8
(22) Anmeldetag: 21.10.1992
(51) Int. Cl.: B62D 53/12, B60D 1/62

(54) **Schleppzug, insbesondere Sattelzug**
Trailer train, especially tractor semi-trailer combination
Convoi routier, notamment combinaison camion semi-remorque

(30) Priorität: 30.10.1991 DE 4135795
(43) Veröffentlichungstag der Anmeldung: 05.05.1993
(73) Patentinhaber: ROCKINGER Spezialfabrik für Anhängerkupplungen GmbH & Co., D-80904 München (DE)
(72) Erfinder: Wohlhüter, Gehard, Dipl.-Ing., W-8000 München 50 (DE)
(74) Vertreter: Weickmann, Heinrich, Dipl.-Ing.

(56) Entgegenhaltungen:
- DE-A- 2 900 866
- US-A- 3 888 513

## Beschreibung

Die Erfindung betrifft einen Schleppzug, insbesondere Sattelzug, umfassend mindestens zwei Teilfahrzeuge, nämlich ein straßengängiges Zugfahrzeug und ein mit dem Zugfahrzeug kuppelbares straßengängiges Nachlauffahrzeug, und eine Mehrzahl Versorgungsleitungen zwischen den beiden Teilfahrzeugen, wobei jede der Versorgungsleitungen eine Leitungskupplung mit einer zugfahrzeugseitigen Leitungskupplungshälfte und einer nachlauffahrzeugseitigen Leitungskupplungshälfte aufweist, wobei vorzugsweise eine Mehrzahl der Leitungskupplungen, möglicherweise alle Leitungskupplungen, in einer Vielfachkupplung zusammengefaßt sind in der Weise, daß jeweils die zugseitigen Leitungskupplungshälften in einer zugseitigen Vielfachkupplungshälfte und die nachlaufseitigen Leitungskupplungshälften in einer nachlaufseitigen Vielfachkupplungshälfte zusammengefaßt sind.

Bei derartigen Schleppzügen hat es sich in der Praxis gezeigt, daß der zum Kuppeln bzw. Lösen der Leitungskupplungshälften erforderliche Kraftaufwand bspw. infolge Verkantens der Kupplungshälften das Kuppeln bzw. Lösen der Leitungskupplungshälften äußerst erschwert, wodurch insbesondere beim Kuppeln nicht immer eine ordnungsgemäße Verbindung der Versorgungsleitungen sichergestellt werden kann.

Demgegenüber ist es die Aufgabe der Erfindung, einen Schleppzug der eingangs genannten Art anzugeben, bei welchem die beim Kuppeln bzw. Trennen der Leitungskupplungshälften auftretenden Kräfte besser beherrscht werden können.

Diese Aufgabe wird dadurch gelöst, daß den Leitungskupplungshälften mindestens einer Leitungskupplung ein Kraftgerät mit je einem Eingriffsteil für die beiden Leitungskupplungshälften zugeordnet ist, wobei die Eingriffsteile nach Einstellung der Leitungskupplungshälften in eine Kupplungsvorbereitungsstellung in gegenseitigen Kraftübertragungseingriff zu bringen sind und mindestens eines dieser Eingriffsteile gegenüber der zugehörigen Leitungskupplungshälfte verstellbar ist, so daß nach Herstellung des Kraftübertragungseingriffs bei nachfolgender Verstellung des mindestens einen Eingriffsteils gegenüber der ihm zugehörigen Leitungskupplungshälfte zwangsläufig eine Relativbewegung zwischen den beiden Leitungskupplungshälften in einer Kupplungsrichtung im Sinne einer Überführung dieser Leitungskupplungshälften in einen Kupplungszustand eintritt. Durch Einsatz des erfindungsgemäßen Kraftgeräts werden die Leitungskupplungshälften infolge eines geordneten Eingriffs der Eingriffsteile bei Betätigung des Kraftgeräts kontrolliert relativ zueinander bewegt, ohne daß hierbei infolge von Verkanten oder dergl. zusätzliche Kräfte auftreten. Somit können die beim Kuppeln bzw. Lösen der Leitungskupplungshälften auftretenden Kräfte besser beherrscht werden, was das Kuppeln bzw. Lösen wesentlich erleichtert und insbesondere beim Kuppeln eine ordnungsgemäße Verbindung der Leitungskupplungshälften sicherstellt.

Das Kraftgerät ist insbesondere bei Zusammenfassung einer Mehrzahl von Leitungskupplungen zu einer Vielfachkupplung von Vorteil, da sich hierbei die zum Kuppeln bzw. Lösen der Leitungskupplungshälften erforderlichen Kräfte summieren. Es wird daher vorgeschlagen, daß die jeweils ein und demselben Teilfahrzeug zugehörigen Leitungskupplungshälften auf einem gemeinsamen Kupplungshälftenträger angeordnet sind und an den beiden Kupplungshälftenträgern jeweils mindestens ein Eingriffsteil angeordnet ist.

Um ein schnelles Kuppeln der Leitungskupplungshälften ermöglichen zu können, ist vorgesehen, daß die beiden Leitungskupplungshälften als Steckkupplungshälften ausgebildet sind und daß das mindestens eine Eingriffsteil gegenüber der zugehörigen Leitungskupplungshälfte in Steckrichtung verstellbar ist.

Um das Kraftgerät in einfacher Weise bedienen zu können, wird vorgeschlagen, daß eine Betätigungseinrichtung für das verstellbare Eingriffsteil an einer der Leitungskupplungshälften oder einem Kupplungshälftenträger gelagert ist.

Zur weiteren Erleichterung des Kuppelns bzw. Lösens der Leitungskupplungshälften kann die Betätigungseinrichtung Kraftübersetzungsmittel aufweisen, so daß ein größerer Betätigungsweg eines Handbetätigungselements der Betätigungseinrichtung einen kleineren Stellweg zwischen den beiden Leitungskupplungshälften erzeugt.

Dadurch, daß die Betätigungseinrichtung in einem ersten Abschnitt eines Betätigungswegs den Kraftübertragungseingriff zwischen den beiden Leitungskupplungshälften herstellt und in einem zweiten Abschnitt des Betätigungswegs die Relativverstellung zwischen den beiden Leitungskupplungshälften im Sinne der Überführung dieser Leitungskupplungshälften in den Kupplungszustand bewirkt, kann ein geordnetes Zusammenführen der beiden Leitungskupplungshälften in einfacher Weise sichergestellt werden.

Da es im gewerblichen Güterverkehr durchaus üblich ist, daß Nachlauffahrzeuge zwischen den Speditionsunternehmen ausgetauscht werden, und eine sorgsame Behandlung des verliehenen Nachlauffahrzeugs durch die Bediensteten des anderen Unternehmens nicht immer sichergestellt ist, wird vorgeschlagen, daß das verstellbare Eingriffsteil als hochwertige und empfindliche Vorrichtung an der zugseitigen Leitungskupplungshälfte vorgesehen ist.

Einfache Fertigbarkeit und Betätigbarkeit dse verstellbaren Eingriffsteils kann erzielt werden, indem das verstellbare Eingriffsteil ein Steuerelement umfaßt, das in einem Führungselement in der Kupplungsrichtung verschiebbar geführt ist, wobei das Führungselement seinerseits an der zugeordneten Leitungskupplungshälfte bzw. dem Kupplungshälftenträger in der Kupplungsrichtung verschiebbar angeordnet ist, indem das Steuerelement ferner eine zur Kupplungsrichtung im, vorzugsweise spitzen, Winkel verlaufende Steuerfläche aufweist, und indem das verstellbare Eingriffsteil ferner wenigstens einen Zugeingriffskörper umfaßt, der an dem Führungselement in einer zur Kupplungsrichtung im wesentlichen senkrecht verlaufenden Richtung beweglich angeordnet ist, wobei die Steuerfläche in dem ersten Abschnitt des Betätigungswegs der Betätigungseinrichtung auf den Zugeingriffskörper einwirkt, so daß dieser zur Herstellung des Kraftübertragungseingriffs zwischen den beiden Leitungskupplungshälften eine am anderen Eingriffsteil ausgebildete Hinterschneidung hintergreift und wobei das Steuerelement ferner in einem zweiten Abschnitt des Betätigungswegs der Betätigungseinrichtung das Führungselement mit dem Zugeingriffskörper und somit das andere Eingriffsteil in den Kupplungszustand überführt.

Eine weitere Erleichterung der Bedienung der Leitungskupplungshälften kann dadurch erzielt werden, daß eine der Leitungskupplungshälften bzw. ein Kupplungshälftenträger, vorzugsweise die nachlaufseitige Leitungskupplungshälfte bzw. ein nachlaufseitiger Kupplungshälftenträger, fest an dem entsprechenden Teilfahrzeug angebracht oder an diesem betriebsmäßig feststellbar ist.

Um ein unbeabsichtigtes Lösen der Leitungskupplungshälften verhindern zu können, ist vorgesehen, daß die Eingriffsteile im Betrieb im Sinne einer Sicherung des Kupplungszustands zwischen den beiden Leitungskupplungshälften in Eingriff stehen.

In Weiterbildung dieser Sicherung wird vorgeschlagen, daß die Leitungskupplungshälften im Kupplungszustand durch zusätzliche Sicherungsmittel gesichert sind.

Zur einfachen Zusammenführung der Leitungskupplungshälften kann von den Leitungskupplungshälften mindestens eine zur Herstellung der Kupplungsvorbereitungsstellung von Hand führungsfrei beweglich sein. Hierbei ist es bevorzugt, wenn von den beiden Leitungskupplungshälften die eine an einem Teilfahrzeug festgestellt oder betriebsmäßig feststellbar ist und die andere Leitungskupplungshälfte an die eine führungsfrei in die Kupplungsvorbereitungsstellung annäherbar ist.

Die Erfindung umfaßt ferner einen Schleppzug, insbesondere Sattelzug, umfassend mindestens zwei Teilfahrzeuge, nämlich ein straßengängiges Zugfahrzeug und ein mit dem Zugfahrzeug kuppelbares straßengängiges Nachlauffahrzeug, und eine Mehrzahl Versorgungsleitungen zwischen den beiden Teilfahrzeugen, wobei jede der Versorgungsleitungen eine Leitungskupplung mit einer zugfahrzeugseitigen Leitungskupplungshälfte und einer nachlauffahrzeugseitigen Leitungskupplungshälfte aufweist, wobei eine Mehrzahl der Leitungskupplungen, vorzugsweise alle Leitungskupplungen, in einer Vielfachkupplung zusammengefaßt sind in der Weise, daß jeweils die zugseitigen Leitungskupplungshälften in einer zugseitigen Vielfachkupplungshälfte und die nachlaufseitigen Leitungskupplungshälften in einer nachlaufseitigen Vielfachkupplungshälfte zusammengefaßt sind.

Um bei einem derartigen Schleppzug sicherstellen zu können, daß die beiden Teilfahrzeuge auch mit einem nicht mit einer Vielfachkupplungshälfte ausgerüsteten Teilfahrzeug gekuppelt werden können, ist in einer Ausführungsform vorgesehen, daß die Leitungskupplungshälften mindestens einer Vielfachkupplungshälfte über flexible Zwischenleitungen und Einzelschnellverbindungen an herkömmliche Einzelanschlüsse des jeweiligen Teilfahrzeugs angeschlossen sind.

Wenn die Einzelanschlüsse hierbei an dem jeweiligen Teilfahrzeug fest angeordnet und an die jeweiligen Schnellverbindungen angepaßt sind, kann die Vielfachkupplung in einfacher Weise an dem Schleppzug nachgerüstet werden, indem die herkömmlichen Versorgungsleitungen abgekuppelt werden und die Vielfachkupplung angekuppelt wird.

Es ist jedoch auch möglich, daß die flexiblen Zwischenleitungen mit festen Versorgungsstellen des jeweiligen Teilfahrzeugs in betriebsmäßig bleibender Verbindung stehen und über die jeweiligen Schnellverbindungen an die zugehörigen Leitungskupplungshälften angeschlossen sind. Zur Verbindung mit einem nicht mit einer Vielfachkupplungshälfte versehenen Teilfahrzeug müssen lediglich die Schnellverbindungen von den zugehörigen Leitungskupplungshälften getrennt und an die Einzelanschlüsse dieses Teilfahrzeugs angekuppelt werden.

In einer alternativen Ausführungsform ist vorgesehen, daß die Leitungskupplungshälften mindestens einer Vielfachkupplungshälfte über flexible Zwischenleitungen und Einzelschnellverbindungen in bleibender Verbindung mit festen Anschlußstellen an dem jeweiligen Teilfahrzeug stehen und daß an diesem zugehörigen Teilfahrzeug zusätzlich herkömmliche Einzelanschlüsse vorgesehen sind. Bei dieser Ausführungsform können bei Bedarf, d.h. bei Verbindung mit einem nicht mit einer Vielfachkupplungshälfte ausgerüsteten Teilfahrzeug, zusätzlich herkömmliche Versorgungsleitungen angeschlossen werden.

Um eine Vielfachkupplungshälfte an dem ihr zugeordneten Teilfahrzeug ablegen zu können, wenn dieses Teilfahrzeug von dem jeweils anderen Teilfahrzeug abgekuppelt ist oder wenn dieses Teilfahrzeug mit einem Teilfahrzeug gekuppelt ist, das nicht mit einer entsprechenden Vielfachkupplungshälfte ausgerüstet ist, wird vorgeschlagen, daß an mindestens einem der Teilfahrzeuge eine Parkvorrichtung zur Aufnahme einer zugehörigen Vielfachkupplungshälfte angeordnet ist, welche das Parken dieser Vielfachkupplungshälfte erlaubt, während deren Leitungskupplungshälften über flexible Zwischenleitungen mit Versorgungsstellen des jeweiligen Teilfahrzeugs in Verbindung stehen.

Die an dieser Vielfachkupplungshälfte angeordneten Leitungskupplungshälften können hierbei vor Witterungseinflüssen und Verschmutzung geschützt werden, wenn die Parkvorrichtung mit Schutzmitteln für die Leitungskupplungshälften der Vielfachkupplungshälfte ausgeführt ist, welche beim Einparken der Vielfachkupplungshälfte in die Parkvorrichtung zwangsläufig wirksam werden.

Um auch eine an einem Teilfahrzeug fest montierte Vielfachkupplungshälfte vor Witterungseinflüssen und Verschmutzung schützen zu können wird weiter vorgeschlagen, daß diese Vielfachkupplungshälfte durch am zugehörigen Teilfahrzeug angebrachte Schutzmittel abdeckbar ist.

Um beim Trennen der Leitungskupplungshälften verhindern zu können, daß ein Entweichen von Druckluft verhindern zu können, ist vorgesehen, daß eine für Druckluftversorgung ausgebildete Leitungskupplungshälfte mit einem Rückschlagventil ausgeführt ist.

Die Erfindung wird im folgenden an Ausführungsbeispielen an Hand der beigefügten Zeichnung näher erläutert werden. Es stellen dar:
- Figur 1: eine schematische Darstellung zur Erläuterung der Kupplung von mit unterschiedlichen Übertragungssystemen ausgerüsteten Teilfahrzeugen;
- Figuren 2 bis 5: schematische Darstellungen verschiedener Ausführungsformen eines Datenumsetzers;
- Figur 6: eine schematische Draufsicht auf zwei Vielfachkupplungshälften im Lösezustand;
- Figur 7: einen Teilschnitt entlang der Linie VII-VII in Figur 6 der Vielfachkupplungshälften im Lösezustand;
- Figuren 8 und 9: Darstellungen analog Figur 7, wobei sich die Vielfachkupplungshälften jedoch im Krafteinriffszustand (Figur 8) bzw. im Kupplungszustand (Figur 9) befinden; und
- Figuren 10 und 11: schematische Darstellungen zur Erläuterung unterschiedlicher Möglichkeiten zum Anschluß der Vielfachkupplungshälften an die jeweiligen Teilfahrzeuge.

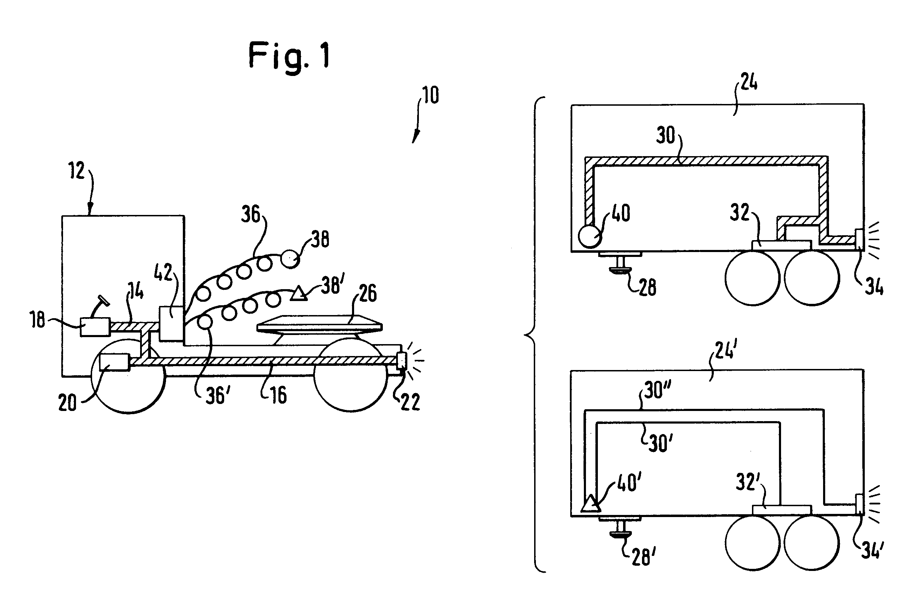

In Figur 1 in ein allgemein mit 10 bezeichneter Sattelzug dargestellt. Ein Zugfahrzeug 12 des Sattelzugs 10 ist mit einem Datenbus-Übertragungssystem 14 ausgerüstet, das eine Datenbus-Leitung 16 aufweist. Über die Datenbus-Leitung 16 werden Steuerdaten übertragen, die von einer Bremspedaleinheit 18 zu einem Bremssystem 20 und einer Bremsleuchte 22 des Zugfahrzeugs 12 übermittelt werden. Weiterhin können über die Datenbus-Leitung 16 auch Statusdaten von dem Bremssystem 20 an die Bremspedaleinheit 18 übermittelt werden. Die Bremspedaleinheit 18 bildet im vorliegenden Fall eine Steuereinheit und das Bremssystem 20 und die Bremsleuchte 22 bilden Funktionseinheiten des Zugfahrzeugs 12. Neben diesen Steuer- und Funktionseinheiten ist das Zugfahrzeug 12 mit weiteren, nicht dargestellten Steuer- und Funktionseinheiten ausgestattet, bspw. Blinkerschalter und Blinkerleuchten und dergl. mehr.

Bei einem Datenbus-Übertragungssystem ist allen an die Datenbus-Leitung angeschlossenen Steuer- und Funktionseinheiten eine "Adresse" zugeordnet. Bei der Datenübermittlung werden der Adresse der Empfängereinheit entsprechende Adreßdaten den zu übermittelnden Steuer- bzw. Statusdaten vorangestellt. Jede der Einheiten empfängt alle über die Datenbus-Leitung übermittelten Daten und überprüft an Hand der Adreßdaten, ob die gerade übertragenen Daten für sie selbst bestimmt sind. Ist dies der Fall, so führt die Einheit einen Prozeß aus, der den mit diesen Adreßdaten übermittelten Steuerdaten entspricht. Bspw. öffnet das Bremssystem 20 infolge eines Bremssignals von der Bremspedaleinheit 18 ein (nicht dargestelltes) Steuerventil einer (ebenfalls nicht dargestellten) Luftdruckbremse.

In Figur 1 sind ferner zwei Sattelauflieger bzw. Nachlauffahrzeuge 24 bzw. 24' dargestellt. Zur Herstellung einer Zug- und Schubverbindung zwischen dem Zugfahrzeug 12 und jeweils einem der Sattelauflieger 24 und 24' ist das Zugfahrzeug 12 mit einer Sattelkupplung 26 ausgerüstet und die Sattelauflieger 24 bzw. 24' weisen Königszapfen 28 bzw. 28' auf.

Im gekuppelten Zustand der Teilfahrzeuge sind zur Versorgung der Funktionseinheiten des Nachlauffahrzeugs ferner eine Mehrzahl Versorgungsleitungen vom Zugfahrzeug zum Nachlauffahrzeug geführt, bspw. Druckluftleitungen zur Versorgung eines Pneumatikbremssystems und einer Luftfederung mit Druckluft, Spannungsleitungen zur Versorgung der Beleuchtungseinrichtungen und dergl. mit Strom und Steuerleitungen, um die Funktionseinheiten mit den jeweils erforderlichen Steuersignalen zu versorgen. In Figur 1 sind lediglich Steuerleitungen 36 bzw. 36' dargestellt.

Der Sattelauflieger 24 ist mit einem Datenbus-Übertragungssystem ausgerüstet, das eine Datenbus-Leitung 30 aufweist. Dies hat den Vorteil, daß die einzelnen Funktionseinheiten des Sattelaufliegers 24 nicht jede für sich mit einer separaten Steuerleitung verbunden werden müssen, sondern alle Funktionseinheiten über die eine schleifenförmig durch den Sattelauflieger 24 gezogene Datenbus-Leitung 30 angesteuert werden können. An die Datenbus-Leitung 30 sind gemäß Figur 1 ein Bremssystem 32 und eine Bremsleuchte 34 als nachlaufseitige Funktionseinheiten angeschlossen. Selbstverständlich können weitere, nicht dargestellte Funktionseinheiten an das Datenbus-Übertragungssystem angeschlossen werden. Bspw. kann ein Steuerventil zur Regulierung des Balgdrucks der Luftfederung des Sattelaufliegers 24 über die Datenbus-Leitung 30 angesteuert werden. Hierzu können Meßdaten eines den Balgdruck messenden Manometers über die Datenbus-Leitung 30 an eine Steuereinheit übermittelt werden. Aus diesen Meßdaten kann dann in einfacher Weise auch das Gewicht der auf dem Sattelauflieger ruhenden Last ermittelt und dem Fahrer des Sattelzug zur Anzeige gebracht werden. Ferner ist es denkbar, Meß- und Steuerdaten zur Reifendrucküberwachung u.v.m über die Datenbus-Leitunng 30 zu übermitteln.

Damit im gekuppelten Zustand von Zugfahrzeug 12 und Sattelauflieger 24 die jeweiligen Steuersignale auch zu den Funktionseinheiten des Sattelaufliegers 24 übertragen werden können, sind das Zugfahrzeug 12 mit einer Verbindungsleitung 36 mit einem Datenbus-Verbindungsstecker 38 und der Sattelauflieger 24 mit einer dem Verbindungsstecker 38 entsprechenden Datenbus-Verbindungsbuchse 40 versehen. Somit können nach hergestellter Verbindung zwischen Verbindungsstecker 38 und Verbindungsbuchse 40 von der Bremspedaleinheit 18 ausgegebene Bremssignale auch an das Bremssystem 32 und die Bremsleuchte 34 des Sattelaufliegers 24 übermittelt werden.

Der Sattelauflieger 24' ist mit einem Einzelleitungs-Übertragungssystem ausgerüstet, das Signalleitungen 30' und 30'' aufweist. Die Signalleitung 30' ist mit ihrem einen Ende mit einem Bremssystem 32' verbunden und die Signalleitung 30'' ist mit ihrem einen Ende mit einer Bremsleuchte 34' verbunden. Mit ihrem jeweils anderen Ende sind die Signalleitungen 30' und 30'' mit einer Einzelleitungs-Verbindungsbuchse 40' verbunden. Damit im gekuppelten Zustand von Zugfahrzeug 12 und Sattelauflieger 24' die jeweiligen Steuersignale auch zu den Funktionseinheiten des Sattelaufliegers 24' übertragen werden können, ist das Zugfahrzeug 12' mit einer Verbindungsleitung 36' mit einem der Verbindungsbuchse 40' entsprechenden Einzelleitungs-Verbindungsstecker 38' und einem Datenumsetzer 42 versehen. Der Datenumsetzer 42 wandelt die zu übertragenden Daten von einer vom Datenbus-Übertragungssystem geforderten Datenform, im folgenden kurz Datenbus-Form, in eine vom Einzelleitungs-Übertragungssystem geforderte Datenform, im folgenden kurz Einzelleitungs-Form, um und umgekehrt. Somit können nach hergestellter Verbindung zwischen Verbindungsstecker 38' und Verbindungsbuchse 40' von der Bremspedaleinheit 18 ausgegebene Bremssignale auch an das Bremssystem 32' und die Bremsleuchte 34' des Sattelaufliegers 24' übermittelt werden.

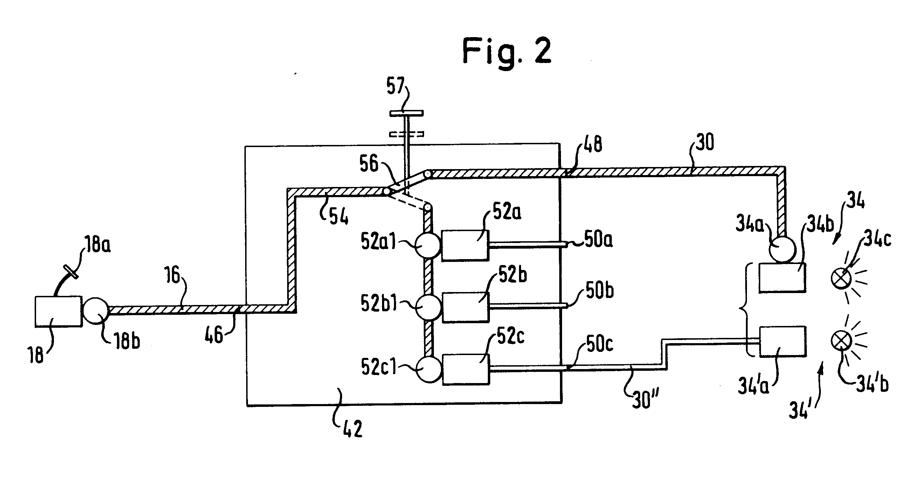

In Figur 1 ist der Datenumsetzer als fest am Zugfahrzeug 12 angebracht dargestellt. Damit dennoch sowohl Nachlauffahrzeuge mit Datenbus-Übertragungssystem, bspw. der Sattelauflieger 24, als auch Nachlauffahrzeuge mit Einzelleitungs-Übertragungssystem, bspw. der Sattelauflieger 24', an das Datenbus-Übertragungssystem des Zugfahrzeugs angeschlossen werden können, ist der Datenumsetzer 42 nachlaufseitig sowohl mit einem Datenbus-Ausgang als auch mit einem Einzelleitungsausgang ausgebildet. Ein bei dem Zugfahrzeug 12 gemäß Figur 1 vorzugsweise einsetzbarer Datenumsetzer wird nachfolgend an Hand von Figur 2 näher erläutert werden.

Damit es bei der Herstellung der Verbindung zwischen den Verbindungssteckern 38 bzw. 38' einerseits und den Verbindungsbuchsen 40 bzw. 40' andererseits nicht zu Verwechslungen kommen kann, bspw. derart, daß der Datenbus-Verbindungsstecker 38 mit der Einzelleitungs-Verbindungsbuchse 40' verbunden wird, sind die Datenbus-Verbindung 38/40 und die Einzelleitungs-Verbindung 38'/40' in unterschiedlicher Gestalt ausgebildet, wie in Figur 1 grobschematisch mit Kreissymbolen für die Datenbus-Verbindung und Dreiecksymbolen für die Einzelleitungs-Verbindung angedeutet ist.

Obgleich mit Bezug auf Figur 1 der Einsatz eines Datenumsetzers bei einem mit einem Datenbus-Übertragungssystem ausgerüsteten Zugfahrzeug beschrieben wurde, können die gleichen Vorteile auch bei Einsatz eines Datenumsetzers bei einem mit einem Einzelleitungs-Übertragungssystem ausgerüsteten Zugfahrzeug erzielt werden.

In Figur 2 ist eine erste Ausführungsform eines Datenumsetzers 42 dargestellt, wie er vorzugsweise bei dem Zugfahrzeug gemäß Figur 1 eingesetzt wird. Der Datenumsetzer 42 ist zugfahrzeugseitig (in der Figur links) mit einem Datenbus-Ausgang 46 und nachlauffahrzeugseitig mit einem Datenbus-Ausgang 48 und Einzelleitungs-Ausgängen 50a, 50b und 50c versehen, so daß er sowohl mit Datenbus-Funktionseinheiten, bspw. der Bremsleuchte 34, als auch mit Einzelleitungs-Funktionseinheiten, bspw. der Bremsleuchte 34', verbunden werden kann, wie in Figur 2 mit einer geschweiften Klammer angedeutet ist.

Den Einzelleitungs-Ausgängen 50a, 50b und 50c ist jeweils ein Datenwandler 52a, 52b bzw. 52c zugeordnet zur Umwandlung von Daten von Datenbus-Signalform in Einzelleitungs-Signalform und umgekehrt. Die Datenwandler 52a, 52b und 52c sind jeweils über einen Datenbus-Leitungsknoten 52a1, 52b1 bzw. 52c1 mit einer Datenbus-Leitung 54 des Datenumsetzers 42 verbunden. Weiterhin weist der Datenumsetzer 42 einen Schalter 56 mit einem Betätigungselement 57 auf, um die interne Datenbus-Leitung 54 nachlaufseitig zwischen dem Datenbus-Ausgang 48 und den Einzelleitungs-Ausgängen 50a, 50b und 50c umschalten zu können.

Obgleich bei dem in Figur 2 dargestellten Ausführungsbeispiel der Schalter 56 als ein von Hand betätigbarer Schalter ausgebildet ist, ist es prinzipiell auch denkbar einen elektronischen Schalter vorzusehen. Hierzu kann bspw. eine (nicht dargestellte) Prüfleitung vorgesehen sein, mittels derer beim Verbinden der beiden Übertragungssysteme festgestellt werden kann, welcher Art die beiden Teilfahrzeuge sind. Als Ergebnis dieser Feststellung kann dann elektronisch zwischen der Verbindung zum Datenbus-Übertragungssystem und der Verbindung zum Einzelleitungs-Übertragungssystem umgeschaltet werden. Bei der Prüfleitung muß es sich dabei nicht notwendigerweise um eine körperliche Leitung handeln. Es ist vielmehr auch denkbar, daß über eine Datenbus-Leitung ein Prüfsignal geschickt wird, mit Hilfe dessen die Kombination der Teilfahrzeuge festgestellt wird.

In der in Figur 2 durchgezogen dargestellten Stellung des Schalters 56 ist der Datenumsetzer 42 zur Übermittlung von Daten zwischen einem zugseitigen Datenbus-Übertragungssystem mit Datenbus-Leitung 16 und einem nachlaufseitigen Datenbus-Übertragungssystem mit Datenbus-Leitung 30 eingestellt.

Bei Betätigung eines Bremspedals 18a erzeugt die Bremspedaleinheit 18 ein dieser Betätigung entsprechendes Bremssignal. Dieses wird hierauf als Brems-Steuerdaten an verschiedene Funktionseinheiten übermittelt, bspw. das zugseitige Bremssystem 20, die zugseitige Bremsleuchte 22, das nachlaufseitige Bremssystem 32 und die nachlaufseitige Bremsleuchte 34 (siehe Figur 1). Zur Übermittlung des Bremssignals an die nachlaufseitige Bremsleuchte 34 übergibt die Bremspedaleinheit 18 über einen ihr zugeordneten Datenbus-Leitungsknoten 18b ein aus den Adreßdaten der Bremsleuchte 34 und den Brems-Steuerdaten bestehendes Datenpaket an die Datenbus-Leitung 16/54/30.

Die Bremsleuchte oder genauer die Bremsleuchteneinheit 34 weist einen ihr zugeordneten Leitungsknoten 34a auf, der sämtliche über die Datenbus-Leitung 16/54/30 übertragenen Datenpakete daraufhin überprüft, ob sie die Adresse der Bremsleuchteneinheit 34 als Adreßdaten enthalten oder nicht. Stellt der Knoten 34a fest, daß in einem Datenpaket die Adresse der Bremsleuchteneinheit enthalten ist, so übergibt er die in diesem Datenpaket enthaltenen Steuerdaten an eine Prozeßeinheit 34b der Bremsleuchteneinheit 34. Hierauf führt die Prozeßeinheit 34b einen den Steuerdaten entsprechenden Prozeß aus, bspw. schaltet sie eine Glühbirne 34c ein, so daß der Bremsvorgang dem Fahrer eines nachfolgenden Fahrzeugs sichtbar angezeigt wird.

Ist hingegen der mit einem Einzelleitungs-Übertragungssystem ausgerüstete Sattelauflieger 24' mit dem Zugfahrzeug 12 gekuppelt, so muß der Schalter 56 des Datenumsetzers 42 in seine in Figur 2 gestrichelt dargestellt Stellung gebracht werden, in welcher der zugseitige Datenbus-Ausgang 46 mit den nachlaufseitigen Einzelleitungs-Ausgängen 50a, 50b und 50c verbunden ist. An dem in Figur 2 untersten Einzelleitungs-Ausgang 50c ist über die Signalleitung 30'' die Bremsleuchteneinheit 34' des Sattelaufliegers 24' angeschlossen.

Wird nun von der Bremspedaleinheit 18 ein für die Bremsleuchteneinheit 34' bestimmtes Bremssignal-Datenpaket an die Datenbus-Leitung 16 übergeben, so erkennt der Knoten 52c1 das in diesem Datenpaket enthaltene Adreßsignal der Bremsleuchteneinheit 34'. Er leitet daraufhin die in dem Datenpaket ebenfalls enthaltenen Brems-Steuerdaten an den Datenwandler 52c weiter, der diese von Datenbus-Signalform in Einzelleitungs-Signalform umwandelt und die umgewandelten Brems-Steuerdaten über die Einzelleitungs-Signalleitung 30'' an eine Prozeßeinheit 34'a der Bremsleuchteneinheit 34' weiterleitet. Nach Erhalt der Steuerdaten führt die Prozeßeinheit 34'a einen den Steuerdaten entsprechenden Prozeß aus, bspw. schaltet sie eine Glühbirne 34'b ein, so daß der Bremsvorgang dem Fahrer eines nachfolgenden Fahrzeugs sichtbar angezeigt wird.

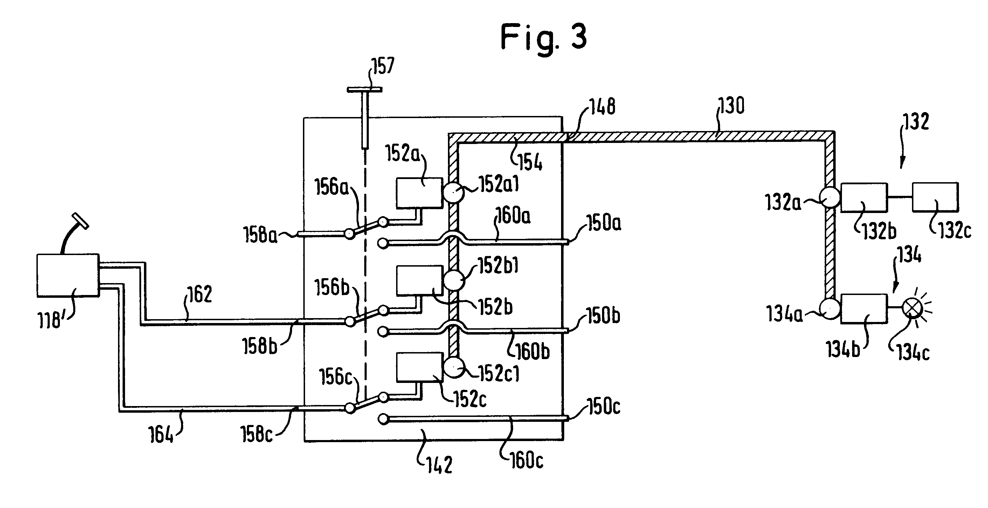

In Figur 3 ist eine weitere Ausführungsform eines Datenumsetzers dargestellt, welche sich von der in Figur 2 dargestellten Ausführungsform dadurch unterscheidet, daß zugseitig Ausgänge zur Verbindung mit einem Einzelleitungs-Übertragungssystem vorgesehen sind. In Figur 3 sind analoge Teile mit gleichen Bezugszeichen versehen wie in Figur 2, jedoch vermehrt um die Zahl 100.

Der Datenumsetzer 142 gemäß Figur 3 weist zugseitig Einzelleitungs-Ausgänge 158a, 158b und 158c und nachlaufseitig sowohl einen Datenbus-Ausgang 148 als auch Einzelleitungs-Ausgänge 150a, 150b und 150c auf. Jedem der zugseitigen Einzelleitungs-Ausgänge 158a, 158b und 158c ist ein Schalter 156a, 156b bzw. 156c zugeordnet, mittels welchem der jeweilige Ausgang 158a, 158b bzw. 158c entweder mit einem zugeordneten Datenwandler 152a, 152b bzw. 152c oder über eine Einzelleitungs-Signalleitung 160a, 160b bzw. 160c direkt mit dem zugeordneten Ausgang 150a, 150b bzw. 150c verbunden werden kann. Die Datenwandler 152a, 152b und 152c stehen jeweils über Datenbus-Leitungsknoten 152a1, 152b1 bzw. 152c1 mit einer zum nachlaufseitigen Datenbus-Ausgang 148 führenden Datenbus-Signalleitung 154 in Verbindung. Die Schalter 156a, 156b und 156c können über ein gemeinsames Betätigungselement 157 betätigt werden.

Der Datenumsetzer 142 ist insbesondere zur festen Anbringung an einem mit einem Einzelleitungs-Übertragungssystem ausgerüsteten Zugfahrzeug geeignet. Bei einem derartigen Zugfahrzeug ist die Bremspedaleinheit 118' mit einer Mehrzahl Einzelleitungs-Steuerleitungen versehen, bspw. mit einer Steuerleitung 162 für die nachlaufseitige Bremssystemeinheit 132 und einer Steuerleitung 164 für die nachlaufseitige Bremsleuchteneinheit 134. Bei Kupplung dieses Zugfahrzeugs mit einem mit Datenbus-Übertragungssystem ausgerüsteten Nachlauffahrzeug und hierdurch bedingter Stellung der Schalter 156a, 156b und 156c gemäß der Darstellung in Figur 3 wird das für die Bremssystemeinheit 132 bestimmte Steuersignal über die Leitung 162 dem Datenwandler 152b zugeführt. Dieser wandelt das Steuersignal in Datenbus-Signaldaten um und stellt diesen die Adreßdaten der Bremssystemeinheit 132 voran. Das so gebildete Datenpaket wird hierauf über den Knoten 152b1 an die Datenbus-Leitung 154 übergeben. In analoger Weise werden für die Bremsleuchteneinheit 134 bestimmte Steuerdaten über die Leitung 164 dem Datenwandler 152c zugeführt, von diesem in Datenbus-Signalform gewandelt und von dem Knoten 152c1 als mit der Adresse der Bremsleuchteneinheit 132 versehenes Datenpaket an die Datenbus-Leitung 154 übergeben.

Erkennt der Knoten 132a der Bremssystemeinheit 132 in einem übertragenen Signal die Adresse der Bremssystemeinheit, so gibt der die zugehörigen Steuerdaten an die Prozeßeinheit 132b weiter, die hierauf einen den Steuerdaten entsprechenden Prozeß des Bremssystems 132c auslöst, bspw. ein Sperrventil eines Luftdruckbremssystems schließt.

Erkennt der Knoten 134a der Bremsleuchteneinheit 134 in einem übertragenen Signal die Adresse der Bremsleuchteneinheit, gibt der die zugehörigen Steuerdaten an die Prozeßeinheit 134b weiter, die hierauf einen den Steuerdaten entsprechenden Prozeß der Glühbirne 134c auslöst, bspw. diese einschaltet.

Die vorstehend beschriebenen Datenumsetzer 42 und 142 eigenen sich zur festen Anbringung an einem der Teilfahrzeuge, vorzugsweise am Zugfahrzeug. Die feste Anbringung ist insbesondere von Vorteil, solange häufig mit unterschiedlichen Übertragungssystemen ausgerüstete Zug- und Nachlauffahrzeuge miteinander gekuppelt werden sollen, d.h. solange das Datenbus-Übertragungssystem noch nicht überwiegend am Markt eingeführt ist, da sie ein häufiges Einsetzen und Entfernen des Datenumsetzers überflüssig macht.

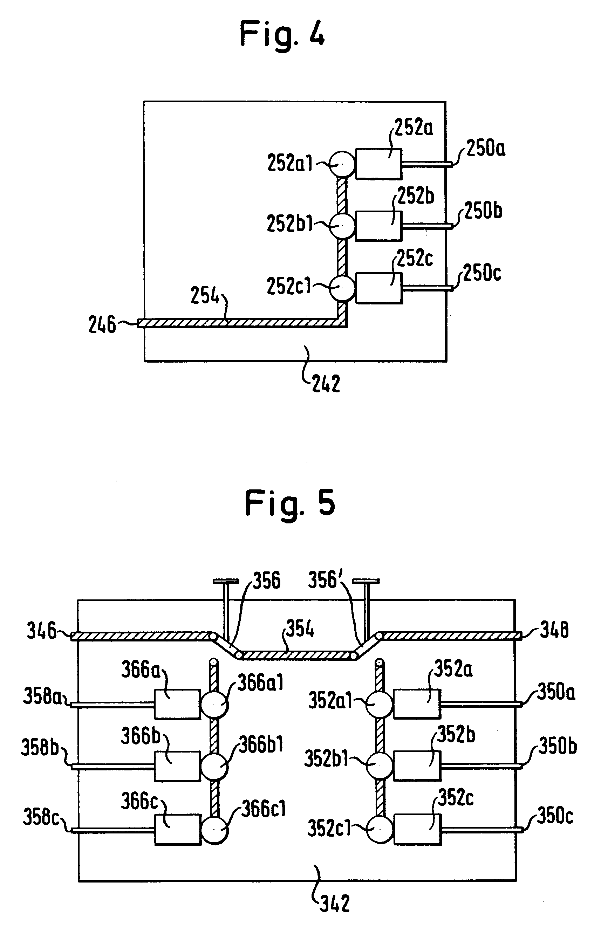

In Figur 4 ist eine weitere Ausführungsform eines Datenumsetzers dargestellt, der im wesentlichen der Ausführungsform gemäß Figur 2 entspricht. Analoge Teile sind daher mit gleichen Bezugszeichen versehen wie in Figur 2, jedoch vermehrt um die Zahl 200.

Der Datenumsetzer 242 weist zugseitig einen Datenbus-Ausgang 246 und nachlaufseitig Einzelleitungs-Ausgänge 250a, 250b und 250c auf. Den Einzelleitungs-Ausgängen 250a, 250b und 250c sind jeweils ein Datenwandler 252a, 252b bzw. 252c mit zugehörigem Datenbus-Leitungsknoten 252a1, 252b1 und 252c1 zugeordnet. Die Knoten 252a1, 252b1 und 252c1 sind über eine Datenbus-Leitung 254 mit dem zugseitigen Datenbus-Ausgang 246 verbunden.

Der Datenumsetzer 242 kann im Bedarfsfall, d.h. bei Kupplung eines Zugfahrzeugs mit Datenbus-Übertragungssystem und eines Nachlauffahrzeugs mit Einzelleitungs-Übertragungssystem, an der Verbindungsstelle zwischen den beiden Übertragungssystemen zwischengeschaltet werden. Bei Kupplung eines Zugfahrzeugs mit einem Nachlauffahrzeug, die beide mit dem gleichen Übertragungssystem ausgerüstet sind wird der Datenumsetzer 242 hingegen nicht zwischengeschaltet, sondern anderweitig, vorzugsweise am Zugfahrzeug, untergebracht. Bzgl. des Betriebs und der Funktion des Datenumsetzers 242 wird auf die vorstehend beschriebenen Ausführungsformen Bezug genommen.

Der einfach aufgebaute und somit kostengünstige Datenumsetzer 242 ist insbesondere nach der Marktdurchsetzung des Datenbus-Übertragungssystems von Vorteil, da dann nur noch selten Zug- und Nachlauffahrzeuge aufeinandertreffen werden, die mit unterschiedlichen Übertragungssystemen ausgerüstet sind. Solange noch nur sehr wenige Zugfahrzeuge mit Datenbus-Übertragungssystem ausgerüstet sind, ist auch der Einsatz eines Datenumsetzers denkbar, der zugseitig mit Einzelleitungs-Ausgängen und nachlaufseitig mit einem Datenbus-Ausgang versehen ist.

In Figur 5 ist eine weitere Ausführungsform eines Datenumsetzers dargestellt, die im wesentlichen der Ausführungsform gemäß Figur 2 entspricht. Analoge Teile sind daher mit gleichen Bezugszeichen versehen wie in Figur 2, jedoch vermehrt um die Zahl 300.

Der Datenumsetzer 342 ist zugseitig mit einem Datenbus-Ausgang 346 und Einzelleitungs-Ausgängen 358a, 358b und 358c und nachlaufseitig mit einem Datenbus-Ausgang 348 und Einzelleitungs-Ausgängen 350a, 350b und 350c ausgebildet. Den zugseitigen Einzelleitungs-Ausgängen 358a, 358b und 358c sind jeweils Datenwandler 366a, 366b und 366c zugeordnet, die über zugehörige Datenbus-Leitungsknoten 366a1, 366b1 und 366c1 mit einer Datenbus-Leitung 354 des Datenumsetzers 342 verbunden sind. Analog sind den nachlaufseitigen Einzelleitungs-Ausgängen 350a, 350b und 350c jeweils Datenwandler 352a, 352b bzw. 352c zugeordnet, die über zugehörige Datenbus-Leitungsknoten 352a1, 352b1 und 352c1 mit der Datenbus-Leitung 354 verbunden sind. Weiterhin sind ein zugseitiger Schalter 356 und ein nachlaufseitiger Schalter 356' vorgesehen, um zwischen dem zugseitigen Datenbus-Ausgang 346 und den zugseitigen Einzelleitungs-Ausgängen 358a, 358b und 358c bzw. zwischen dem nachlaufseitigen Datenbus-Ausgang 348 und den nachlaufseitigen Einzelleitungs-Ausgängen 350a, 350b und 350c umzuschalten. Bzgl. des Betriebs und der Funktion des Datenumsetzers 342 wird auf die vorstehend beschriebenen Ausführungsformen Bezug genommen.

Der Datenumsetzer 342 kann bei Zug- und Nachlauffahrzeugen mit beliebigen Kombinationen von Datenbus-Übertragungssystem und Einzelleitungs-Übertragungssystem eingesetzt werden. Er kann sowohl fest an einem der Teilfahrzeuge angebracht sein, als auch nur bei Bedarf zwischengeschaltet werden. Der Datenumsetzer 342 ist somit universell einsetzbar.

Prinzipiell ist es auch möglich, die vorstehend beschriebenen Datenumsetzer ohne einen Schalter zum Umschalten zwischen Datenbus-Ausgang und Einzelleitungs-Ausgängen auszubilden. Zur Vermeidung von Verdopplung und Überlagerung der zu übertragenden Daten muß dann jedoch sichergestellt sein, daß entweder nur vom Datenbus-Ausgang oder nur von den Einzelleitungs-Ausgängen Daten abgegriffen und den jeweiligen Funktionseinheiten zugeführt werden. Es könnte nämlich vorkommen, daß ein zugseitiger Datenumsetzer, der nachlaufseitig mit beiden Ausgangsarten versehen ist, mit einem nachlaufseitigen Datenumsetzer, der zugseitig mit beiden Ausgangsarten versehen ist, gekoppelt wird. In diesem Fall würden den Funktionseinheiten dann sowohl die über die Datenbus-Ausgänge der Datenumsetzer übertragenen Daten als auch die über die Einzelleitungs-Ausgänge übertragenen Daten zur Verarbeitung zugeführt, was zu Datenverdopplung- und überlagerung führen würde.

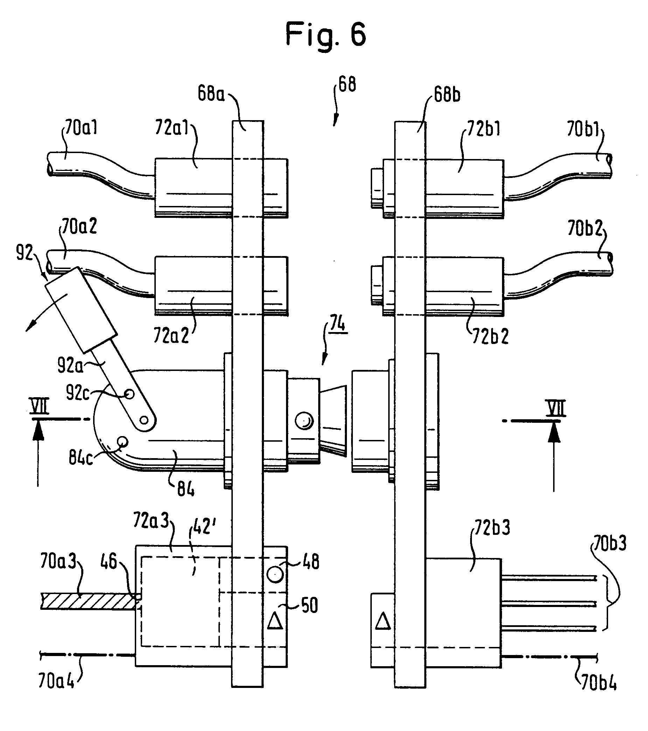

In Figur 6 ist eine Vielfachkupplung 68 mit einer zugseitigen Vielfachkupplungshälfte 68a und einer nachlaufseitigen Vielfachkupplungshälfte 68b dargestellt, welche zur im wesentlichen gleichzeitigen Verbindung einer Mehrzahl von zug- und nachlaufseitigen Versorgungleitungen dient.

Gemäß Figur 6 sind bspw. zwei zugseitige Luftdruckleitungen 70a1 und 70a2 zu zugehörigen Leitungskupplungshälften 72a1 und 72a2 geführt, die in der Vielfachkupplungshälfte 68a fest angeordnet sind. Entsprechend sind nachlaufseitige Luftdruckleitungen 70b1 und 70b2 zu zugehörigen Leitungskupplungshälften 72b1 und 72b2 geführt, die in der Vielfachkupplungshälfte 68b fest angeordnet sind. Die Leitungskupplungshälften 72a1 und 72b1 bzw. 72a2 und 72b2 können zur betriebsmäßigen Verbindung der Leitungen 70a1 und 70b1 bzw. 70a2 und 70b2 miteinander gekuppelt werden. Ferner ist an der Vielfachkupplungshälfte 68a eine Elektroleitungskupplungshälfte 72a3 fest angebracht, zu der eine Datenbus-Steuerleitung 70a3 sowie eine Elektro-Versorgungsleitung 70a4 geführt sind, und an der Vielfachkupplungshälfte 68b ist Elektroleitungskupplungshälfte 72b3 fest angebracht, zu der Einzelleitungs-Steuerleitungen 70b3 sowie eine Elektro-Versorgungsleitung 70b4 geführt sind.

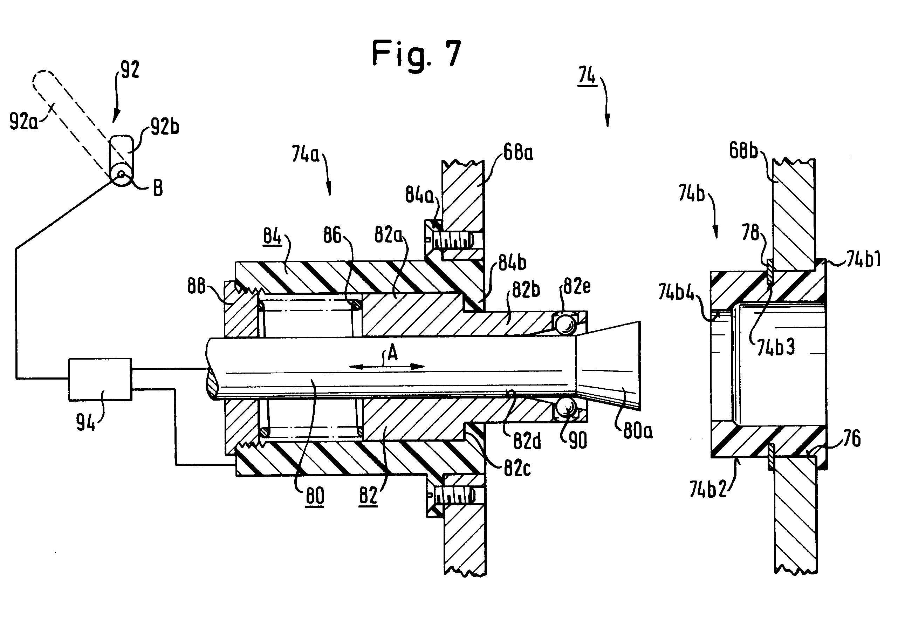

Zur Erleichterung des Kupplungsvorgangs der beiden Vielfachkupplungshälften 68a und 68b, der infolge der Summierung der notwendigen Einzelkupplungskräfte und evtl. zusätzlich notwendiger Kräfte aufgrund Verkantens oder dergl. der Leitungskupplungshälften einen höheren Gesamtkraftaufwand erfordert, ist die Vielfachkupplung 68 mit einem Kraftgerät 74 versehen, dessen Funktion weiter unten an Hand der Figuren 7 bis 9 noch eingehend erläutert werden wird.

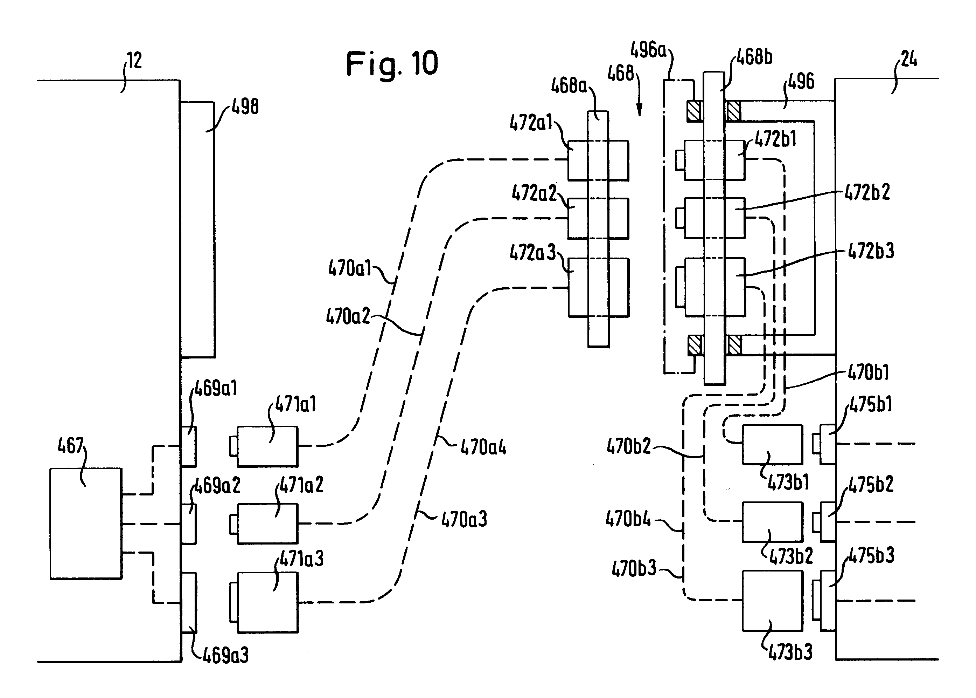

In Figur 10 ist schematisch eine erste Möglichkeit zum Anschluß der Vielfachkupplungshälften an die jeweiligen Teilfahrzeuge 12 und 24 dargestellt, wobei analoge Teile mit gleichen Bezugszeichen versehen sind wie in Figur 6, jedoch vermehrt um die Zahl 400. Der Übersichtlichkeit der Zeichnung halber wurde in Figur 10 auf die Darstellung eines Kraftgeräts verzichtet.

Die Vielfachkupplung 468 unterscheidet sich von der Vielfachkupplung 68 lediglich dadurch, daß neben der zugseitigen Steuerleitung 470a3 auch die nachlaufseitige Steuerleitung 470b3 als Datenbus-Steuerleitung ausgebildet ist.

Die zugseitigen flexiblen Versorgungsleitungen 470a1-470a4 (in Figur 10 gestrichelt dargestellt) sind an ihren einen Enden fest mit jeweils zugehörigen Leitungskupplungshälften 472a1-472a3 verbunden, die ihrerseit fest an der zugseitigen Vielfachkupplungshälfte 468a angebracht sind. Über ihre anderen Enden sind die Versorgungsleitungen mit ihnen zugeordneten Einzelschnellverbindungen 471a1-471a3 verbunden. Die Einzelschnellverbindungen 471a1-471a3 können mit Einzelanschlüssen 469a1-469a3 gekuppelt werden, welche am Zugfahrzeug 12 bereits herkömmlich angeordnet sind und von einer am Zugfahrzeug 12 angeordneten zentralen Versorgungseinheit 467 her versorgt werden. Obgleich in Figur 10 eine einzige zentrale Versorgungseinheit 467 sowohl zur Versorgung der Druckluftleitungen 470a1 und 470a2 mit Druckluft als auch der Steuerleitung 470a3 mit Steuersignalen als auch der Stromversorgungsleitung 470a4 mit Strom dargestellt ist, können mehrere getrennte Versorgungseinheiten vorgesehen sein.

Die nachlaufseitigen flexiblen Versorgungsleitungen 470b1-470b4 (in Figur 10 gestrichelt dargestellt) sind an ihren einen Enden fest mit jeweils zugehörigen Leitungskupplungshälften 472b1-472b3 verbunden, die ihrerseit fest an der nachlaufseitigen Vielfachkupplungshälfte 468b angebracht sind. Mit ihren anderen Enden sind die Versorgungsleitungen mit ihnen zugeordneten Einzelschnellverbindungen 473b1-473b3 verbunden. Die Einzelschnellverbindungen 473b1-473b3 können mit Einzelanschlüssen 475b1-475b3 gekuppelt werden, welche am Nachlauffahrzeug 24 bereits herkömmlich angeordnet sind und von welchen aus die (nicht dargestellten) nachlaufseitigen Funktionseinheiten bedient werden, sei es mit Druckluft, Strom oder Steuersignalen.

Die nachlaufseitige Vielfachkupplungshälfte 468b ist fest in einer am Nachlauffahrzeug 24 fest angebrachten Halterung 496 aufgenommen. Die Halterung 496 ist mit einer Abdeckung 496a (in Figur 10 schematisch durch eine strich-punktierte Linie angedeutet) ausgerüstet, die die Vielfachkupplungshälfte 468b abdeckt und gegen Witterungseinflüsse und Verschmutzung schützt, wenn diese nicht mit der zugseitigen Vielfachkupplungshälfte 468a gekuppelt ist. Die Abdeckung 496a ist hierzu vorzugsweise in die vorstehend beschriebene Abdeckstellung vorgespannt, so daß sie beim Trennen der beiden Vielfachkupplungshälften 468a und 468b automatisch in die Abdeckstellung übergeführt wird.

Am Zugfahrzeug 12 ist eine Parkhalterung 498 fest angebracht, in der die zugseitige Vielfachkupplungshälfte 468a nach ihrer Trennung von der nachlaufseitigen Vielfachkupplungshälfte 468b abgelegt werden kann. Die Parkhalterung 498 ist vorzugsweise derart ausgebildet, daß die Vielfachkupplungshälfte 468a über das Kraftgerät (entsprechend dem Kraftgerät 74 in Figur 6) mit ihr verriegelt werden kann. Ferner verfügt die Parkhalterung 498 vorzugsweise über (nicht dargestellte) Dichtmittel, bspw. eine Gummidichtung, so daß die zugseitige Vielfachkupplungshälfte 468a in der vorstehend beschriebenen verriegelten Parkstellung gegen Witterungseinflüsse und Verschmutzung geschützt ist.

Zum Verbinden der beiden Vielfachkupplungshälften 468a und 468b im gekuppelten Zustand des Schleppzugs 12/24 entnimmt ein Bedienungsmann zunächst die zugseitige Vielfachkupplungshälfte 468a aus der Parkhalterung 498 und führt sie von Hand an die nachlaufseitige Vielfachkupplungshälfte 468b heran. Hierauf entfernt er die Abdeckung 496a von der nachlaufseitigen Vielfachkupplungshälfte 468b. Schließlich führt er die beiden Vielfachkupplungshälften zusammen und verriegelt sie mit Hilfe des Kraftgeräts. Zum Trennen der beiden Vielfachkupplungshälften löst der Bedienungsmann deren Verriegelung mit Hilfe des Kraftgeräts, trennt die beiden Vielfachkupplungshälften und verriegelt die zugseitige Vielfachkupplungshälfte 468a in der Parkhalterung 498. Hierbei wird die Abdeckung 496a automatisch in die Abdeckstellung übergeführt.

Mit Hilfe der in Figur 10 dargestellten Ausführungsform kann eine Vielfachkupplung in einfacher Weise bei einem herkömmlichen Schleppzug nachgerüstet werden, bei welchem die Verbindung von Zugfahrzeug 12 und Nachlauffahrzeug 24 mittels flexiblen, mit Einzelschnellverbindungen versehenen Versorgungsleitungen hergestellt wird, die direkt von den zugseitigen Einzelanschlüssen 469a1-469a3 zu den nachlaufseitigen Einzelanschlüssen 475b1-475b3 geführt sind.

Zur Nachrüstung müssen lediglich ein zugseitiger Nachrüstsatz, der die Parkhalterung 498, die zugseitige Vielfachkupplungshälfte 468a und die Versorgungsleitungen 470a1-470a4 mit den Steckverbindern 471a1-471a3 und 472a1-472a3 umfaßt, und ein nachlaufseitiger Nachrüstsatz, der die Halterung 496, die nachlaufseitige Vielfachkupplungshälfte 468b und die Versorgungsleitungen 470b1-470b4 mit den Steckverbindern 473b1-473b3 und 472b1-472b3 umfaßt, am Zugfahrzeug 12 bzw. am Nachlauffahrzeug 24 angebracht werden. Nach Entfernen der herkömmlichen Versorgungsleitungen können die Einzelschnellverbindungen 471a1-471a3 bzw. 473b1-473b3 an die Einzelanschlüsse 469a1-469a3 des Zugfahrzeugs 12 bzw. 475b1-475b3 des Nachlauffahrzeugs 24 angeschlossen werden. Selbstverständlich kann auch nur eines der Teilfahrzeuge mit einer Vielfachkupplungshälfte nachgerüstet werden.

Trifft ein nachgerüstetes Zugfahrzeug 12 auf ein nicht nachgerüstetes Nachlauffahrzeug, so kann die Vielfachkupplungshälfte 468a in der Parkhalterung 498 abgelegt und verriegelt werden. Damit Zug- und Nachlauffahrzeug nunmehr über herkömmliche Versorgungsleitungen verbunden werden können, müssen nur noch die Einzelschnellverbindungen 471a1-471a3 von den zugseitigen Einzelanschlüssen 469a1-469a3 getrennt werden. Beim Aufeinandertreffen eines nicht nachgerüsteten Zugfahrzeugs und eines nachgerüstetes Nachlauffahrzeugs wird analog vorgegeangen.

Somit weist sich die vorstehend beschriebene Ausführungsform der Vielfachkupplung nicht nur die einfache Nachrüstbarkeit, sondern auch durch Verträglichkeit mit den herkömmlichen Versorgungsleitungs-Kupplungssystemen aus.

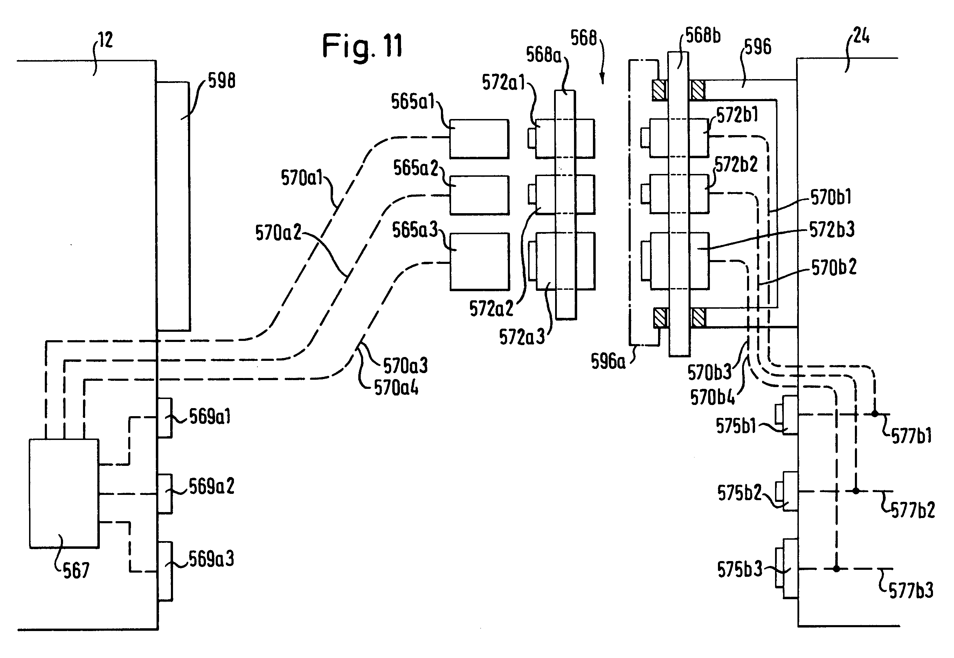

In Figur 11 ist eine weitere Möglichkeit zum Anschluß der Vielfachkupplungshälften an die jeweiligen Teilfahrzeuge 12 und 24 schematisch dargestellt, wobei analoge Teile mit gleichen Bezugszeichen versehen sind wie in Figur 6, jedoch vermehrt um die Zahl 500.

Bei der in Figur 11 dargestellten Vielfachkupplung 568 sind die an der zugseitigen Vielfachkupplungshälfte 568a angeordneten Leitungskupplungshälften 572a1-572a3 auch zugseitig als Steckverbindungen ausgebildet. Die zugseitigen Versorgungsleitungen 570a1-570a4 sind nachlaufseitig mit Einzelschnellverbindungen 565a1-565a3 versehen, die mit den Leitungskupplungshälften 572a1-572a3 gekuppelt werden können, und zugseitig direkt an die zentrale Versorgungseinheit 567 angeschlossen. Zusätzlich sind die Einzelanschlüsse 569a1-569a3 an die zentrale Versorgungseinheit 567 angeschlossen. Die nachlaufseitigen Versorgungsleitungen 570b1-570b4 sind zugseitig mit in der nachlaufseitigen Vielfachkupplungshälfte 568b angeordneten Leitungskupplungshälften 572b1-572b3 verbunden und münden nachlaufseitig in Versorgungsleitungen 577b1-577b3, die von den zusätzlich vorgesehenen Einzelanschlüssen 575b1-575b3 zu den (nicht dargestellten) Funktionseinheiten des Nachlauffahrzeugs 24 führen.

Da sowohl am Zugfahrzeug 12 als auch am Nachlauffahrzeug 24 zusätzlich Einzelanschlüsse 568a1-569a3 bzw. 575a1-575a3 vorgesehen sind, ist auch bei der Ausführungsform gemäß Figur 11 sichergestellt, daß die beiden nachgerüsteten Teilfahrzeuge 12 und 24 auch mit nicht nachgerüsteten Teilfahrzeugen gekuppelt werden können. In diesem Fall müssen lediglich herkömmliche Versorgungsleitungen von dem nicht nachgerüsteten Teilfahrzeug zu den Einzelanschlüssen 568a1-569a3 bzw. 575a1-575a3 geführt werden.

In einer weiteren (nicht dargestellten) Abwandlung ist es auch denkbar, die unmittelbar an die zentrale Versorgungseinheit 567 angeschlossenen Versorgungsleitungen 570a1-570a4 unter Weglassung der Einzelschnellverbindungen 565a1-565a3 unmittelbar zu den Leitungskupplungshälften 572a1-572a3 zu führen.

Gemäß Figur 6 ist in der zugseitigen Leitungskupplungshälfte 70a3 ein Datenumsetzer 42' angeordnet, der vorzugsweise einen Aufbau aufweist, wie er vorstehend an Hand von Figur 2 erläutert wurde. Daher weist die Leitungskupplungshälfte 70a3 ein in Figur 6 mit einem Kreissymbol gekennzeichnetes Verbindungselement für den nachlaufseitigen Datenbus-Ausgang 48 und ein in Figur 6 mit einem Dreiecksymbol gekennzeichnetes Verbindungselement für die nachlaufseitigen Einzelleitungs-Ausgänge 50 auf. Die nachlaufseitige Leitungskupplungshälfte 70b3 weist hingegen lediglich ein Verbindungselement für Einzelleitungs-Steuerleitungen auf, welches in Figur 6 mit einem Dreiecksymbol gekennzeichnet ist.

Die Verbindungselemente für die Datenbus-Steuerleitung und die Einzelleitungs-Steuerleitungen sind in unterschiedlicher Gestalt ausgebildet, wie in Figur 6 grobschematisch mit einem Kreissymbol für die Datenbus-Steuerleitung und einem Dreiecksymbol für die Einzelleitungs-Steuerleitungen angedeutet ist. Hierdurch kann es auch bei Verbindung eines einzelnen Steuerleitungs-Verbindungselements eines Nachlauffahrzeugs mit der Leitungskupplungshälfte 70a3 nicht zu irrtümlich falschen Verbindungen eines Datenbus-Übertragungssystems mit einem Einzelleitungs-Übertragungssystem kommen.

Die Anordnung des Datenumsetzers 42' in der Leitungskupplungshälfte 70a3 der Vielfachkupplungshälfte 68a hat den Vorteil, daß im Anschluß an den Datenumsetzer nicht, wie noch in Figur 1 dargestellt, für das Datenbus-Übertragungssystem und das Einzelleitungs-Übertragungssystem separate Leitungen zum Nachlauffahrzeug geführt werden müssen, sondern der Datenumsetzer unmittelbar an der Trennstelle von Zugfahrzeug und Nachlauffahrzeug angeordnet werden kann.

Im folgenden werden an Hand der Figuren 7 bis 9 Aufbau und Funktion des Kraftgeräts 74 näher erläutert werden.

Das Kraftgerät 74 umfaßt ein nachlaufseitiges Krafteingriffselement 74b, welches im wesentlichen zylinderförmig ausgebildet und in eine Ausnehmung 76 in der nachlaufseitigen Vielfachkupplungshälfte 68b eingesetzt ist. An seinem in Figur 7 rechten Ende ist das Krafteingriffselement 74b mit einem radial nach außen vorstehenden Ringflansch 74b1 ausgebildet, mit welchem es im in die Ausnehmung 76 eingesetzten Zustand gegen die Vielfachkupplungshälfte 68b anliegt. Ferner ist in einer zylindrischen Außenfläche 74b2 eine Ringnut 74b3 ausgebildet, in welche ein Sprengring 78 derart eingesetzt werden kann, daß die Vielfachkupplungshälfte 68b zwischen dem Sprengring 78 und dem Ringflansch 74b1 eingespannt und somit das Krafteingriffselement 74b an der Vielfachkupplungshälfte 68b fest gehalten ist. An seinem vom Ringflansch 74b1 entfernten Ende ist das Krafteingriffselement 74b mit einer hinterschnittenen Ausnehmung 74b4 ausgebildet.

Das Kraftgerät 74 umfaßt ferner ein zugseitiges Krafteingriffselement 74a mit einem im wesentlichen zylinderförmigen Steuerelement 80, welches an seiner dem Krafteingriffselement 74b zugewandten Seite einen konisch erweiterten Abschnitt 80a aufweist. Das Krafteingriffselement 74a ist über einen Radialflansch 84a des Halterungselements 84 an der Vielfachkupplungshälfte 68a befestigt, bspw. festgeschraubt.

Das Steuerelement 80 ist in seiner Längsrichtung A längsverschieblich in einer Längsbohrung 82d eines Führungselements 82 gelagert, welches wiederum in einem Halterungselement 84 in Richtung A längsverschieblich aufgenommen ist.

Das Führungselement 82 weist einen Abschnitt 82a größeren Durchmessers und einen Abschnitt 82b kleineren Durchmessers auf, die zwischen sich einen Schulterabschnitt 82c ausbilden. Eine Schraubendruckfeder 86, die sich einenends an einem in das Halterungselement 84 eingeschraubten Abschlußteil 88 und andernends an dem Führungselement 82 abstützt, spannt das Führungselement 82 in Figur 6 nach rechts in eine Anschlagstellung vor, in welcher es mit dem Schulterabschnitt 82c gegen einen nach inneren Radialflansch 84b anliegt.

Die Längsbohrung 82d des Führungselements 82 ist an seiner dem Krafteingriffselement 74b zugewandten Seite dem konischen Abschnitt 80a des Steuerelements 80 entsprechend konisch erweitert. Im Bereich der konischen Erweiterung des Führungselements 82 sind Radialbohrungen 82e ausgebildet, in welchen Kugeln 90 als Zugeingriffskörper geführt sind. Die Radialbohrungen 82e sind radial außen etwas verengt, so daß die Kugeln 90 zwar aus den Radialbohrungen 82e teilweise heraustreten, jedoch nicht herausfallen können. Eine Bewegung der Kugeln 90 radial nach innen wird durch die Außenumfangsfläche des Steuerelements 80 begrenzt.

Das Krafteingriffselement 74a umfaßt ferner ein Betätigungselement 92 mit einem Hebel 92a, mittels dessen die Bewegung des Steuerelements 80 in Richtung A gesteuert werden kann. Das Betätigungselement 92 ist um eine orthogonal zur Zeichenebene in Figur 7 verlaufende Achse B schwenkbar und umfaßt einen Betätigungsnocken 92b, der über eine Kraftübersetzungseinrichtung 94 derart auf das Steuerelement 80 einwirkt, daß ein größerer Betätigungsweg des Betätigungselements 92 einen kleineren Verschiebeweg des Steuerelements 80 relativ zum Halterungselement 84 zur Folge hat.

Zum Verbinden der Vielfachkupplungshälften 68a und 68b ausgehend von ihrer in Figur 7 dargestellten Lösestellung werden zunächst das Steuerelement 80 und das Führungselement 82 in die Ausnehmung 74b4 des Krafteingriffselements 74b eingeführt. Hierauf wird das Betätigungselement 92 in Figur 7 entgegen dem Uhrzeigersinn verschwenkt, wodurch das Steuerelement 80 vermittels der Kraftübersetzungseinrichtung 94 in Figur 7 in Richtung A nach links bewegt wird. Infolge dieser Bewegung wird der konisch erweiterte Abschnitt 80a des Steuerelements 80 in die konische Erweiterung der Längsbohrung 82d eingeführt, wobei die Kugeln 90 durch die als Steuerfläche wirkende Außenumfangsfläche des konischen Abschnitts 80a radial außen aus den Radialbohrungen 82e herausgedrängt werden.

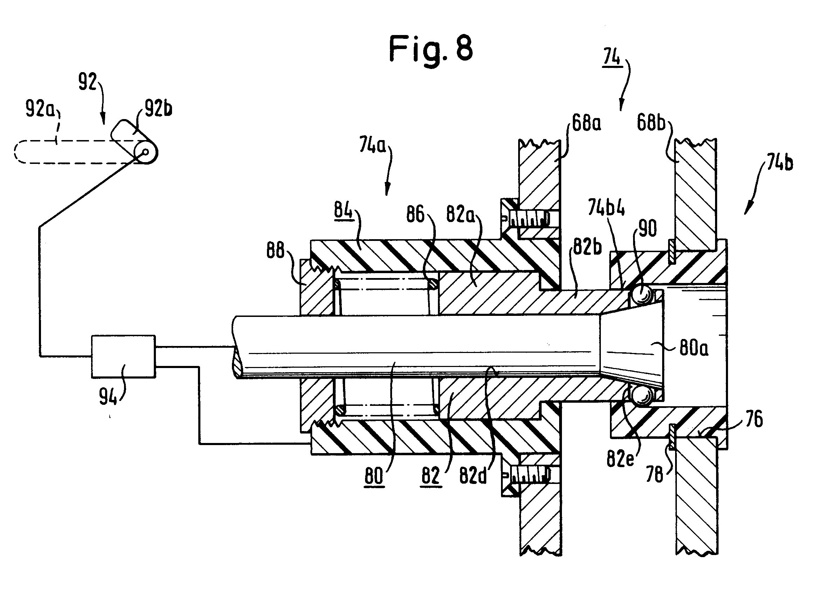

Ist das Steuerelement 80 in der Stellung gemäß Figur 8 vollständig in das Führungselement 82 hineingezogen, so hintergreifen die Kugeln 90 die Hinterschneidung der Ausnehmung 74b4 des Krafteingriffselements 74b und stellen einen Kraftübertragungseingriff zwischen den Krafteingriffselementen 74a und 74b her. In dieser Stellung befinden sich die Vielfachkupplungshälften 68a und 68b in ihrem Kupplungsvorbereitungszustand.

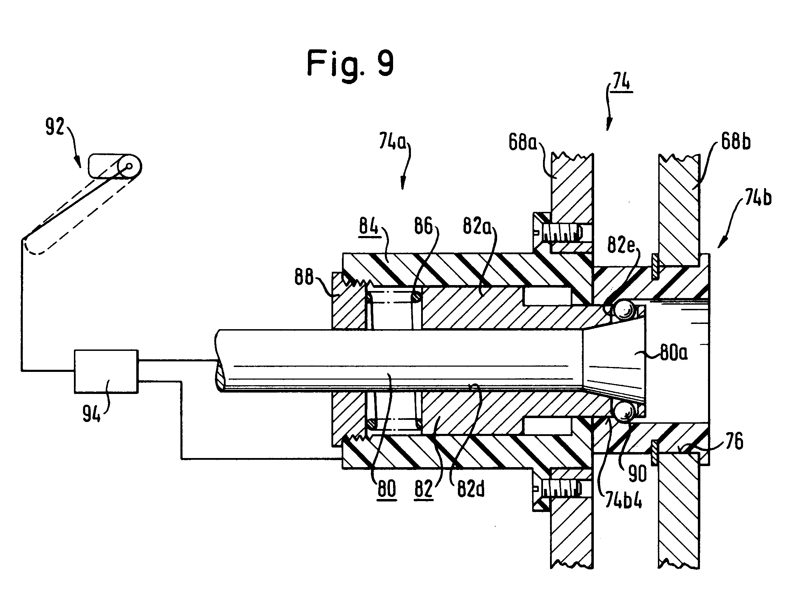

Bei weiterem Verschwenken des Betätigungselements 92 in Figur 8 entgegen dem Uhrzeigersinn wird das Steuerelement 80 weiter in Figur 8 nach links bewegt. Bei dieser Bewegung nimmt das Steuerelement 80 infolge der Anlage der Außenumfangsfläche seines konischen Abschnitts 80a gegen die Innenfläche der konischen Erweiterung des Führungselements 82 das Führungselement 82 gegen die Kraft der Feder 86 mit. Weiterhin werden bei dieser Bewegung infolge des Kraftübertragungseingriffs über die Kugeln 90 die Krafteingriffselemente 74a und 74b zur Herstellung der in Figur 9 dargestellten Kupplungsstellung der Vielfachkupplungshälften 68a und 68b zusammengezogen.

Hat das Betätigungselement 92 seine in Figur 9 dargestellte Stellung erreicht, so rastet ein in dem Hebel 92a geführter Sicherungsstift 92c (siehe Figur 6) infolge einer Vorspannkraft einer (nicht dargestellten) Sicherungsfeder in eine im Halterungselement 84 ausgebildete Sicherungsausnehmung 84c ein. Der Sicherungsstift 92c, die (nicht dargestellte) Feder und die Sicherungsausnehmung 84c bilden zusammen Sicherungsmittel, die den Hebel 92a gegen ein unbeabsichtigtes Verschwenken aus der in Figur 9 dargestellten Stellung heraus und somit die beiden Vielfachkupplungshälften 68a und 68b in ihrem Kupplungszustand sichern.

Zum Lösen der Vielfachkupplungshälften 68a und 68b wird ausgehend von der gesicherten Kupplungsstellung der Vielfachkupplungshälften 68a und 68b gemäß Figur 9 der Sicherungsstift 92c gegen die Kraft der (nicht dargestellten) Sicherungsfeder aus der Sicherungsausnehmung 84c gezogen (Figur 6). Dann wird das Betätigungselement 92 in Figur 9 im Uhrzeigersinn verschwenkt, wodurch das Steuerelement 80 in Figur 9 nach rechts bewegt wird. Hierbei wird auch das Führungselement 82 durch die Kraft der Feder 86 nach rechts gedrückt. Die Feder 86 muß derart bemessen sein, daß der Kraftübertragungseingriff zwischen den Krafteingriffselementen 74a und 74b während dieser Bewegung stets zuverlässig aufrecht erhalten bleibt.

Hat das Führungselement 82 seine Anschlagstellung gemäß Figur 8 erreicht, so wird bei weiterem Verschwenken des Betätigungselements 92 in Figur 8 im Uhrzeigersinn der konische Abschnitt 80a des Steuerelements 80 aus der konischen Erweiterung der Längsbohrung 82d herausgeführt. Hierdurch können die Kugeln 90 sich wieder in die Radialbohrungen 80e zurückziehen, wodurch der Kraftübertragungseingriff der Krafteingriffselemente 74a und 74b aufgehoben wird und die Vielfachkupplungshälfteen wieder in die Lösestellung gemäß Figur 7 übergeführt werden können.

Obgleich das vorstehend beschriebene Ausführungsbeispiel gemäß den Figuren 6 bis 9 mit einem handbetätigten Kraftgerät 74 ausgerüstet war, ist es prinzipiell denkbar, ein elektromotorisch bzw. pneumatisch betätigtes Kraftgerät zu verwenden. Da die hierfür erforderlichen Elektro- bzw. Luftdruck-Leitungen ohnehin zu der Vielfachkupplung geführt sind, kann eine derartige Umrüstung ohne größeren Aufwand vorgenommen werden.

Die Erfindung ist grundsätzlich und vorzugsweise anwendbar bei Sattelzügen. Sie ist aber auch bei anderen Schleppzügen anwendbar, die mit herkömmlichen Anhängerkupplungen gekuppelt werden. So ist die Erfindung anwendbar bei LKWs und Omnibussen mit Anhänger herkömmlicher Bauart, z.B. Anhänger, die eine deichselgelenkte Vorderachse und mindestens eine hintere Starrachse besitzen, wobei die Deichsel über eine Kupplungsöse mit einer Bolzenkupplung am rückwärtigen Ende des LKWs bzw. Omnibusses gekuppelt wird. ein weiteres Anwendungsfeld sind Transportzüge, bestehend aus einem LKW oder einem sonstigen Zugfahrzeug mit üblicher Anhängerkupplung und einem Einachs- oder Tandemanhänger, der über eine starre Deichsel an die Anhängerkupplung des Zugfahrzeugs angekuppelt wird.

Grundsätzlich ist die Erfindung aber auch bei Schleppzügen anwendbar, die etwa von einem PKW und einem daran angekuppelten Einachs- oder Tandemanhänger gebildet werden. Weiterhin ist die Erfindung bei Schleppzügen anwendbar, bei denen das Nachlauffahrzeug ein fahrbares Gerät, bspw. ein landwirtschaftliches Gerät oder ein Baugerät, ist.

Gemäß Vorstehendem wird unter einem herkömmlichen Anhänger also zum einen ein Anhänger verstanden, der an seinem vorderen Ende eine Deichsel aufweist, wobei diese Deichsel mit einer Kupplungsöse zum Eingriff mit einer Anhängerkupplung des Zugfahrzeugs nach Art der US-Patentschrift 4,577,885 und der deutschen Auslegeschrift 1 095 132 versehen ist.

Bei einer Art derartiger herkömmlicher Anhänger ist die Deichsel relativ zum Anhänger um die vertikale Achse schwenkbar ausgebildet und die Vorderräder des Anhängers können mittels der Deichsel gelenkt werden, während am hinteren Ende des Anhängers zwei oder mehr Räder auf starren, unlenkbaren Achsen angeordnet sind. Eine andere Art derartiger herkömmlicher Anhänger weist eine starr mit dem Anhänger verbundene Deichsel und eine oder zwei in Längsrichtung des Anhängers dicht hintereinander angeordnete, starre und unlenkbare Achsen auf.

Unter einem herkömmlichen Anhänger wird zum anderen aber auch ein Anhänger verstanden, der an seinem vorderen Ende eine Deichsel mit einer Kupplungspfanne zum kugelgelenkigen Eingriff mit einem Kugelkopf einer Anhängerkupplung des Zugfahrzeugs aufweist.

## Patentansprüche

1. Schleppzug (10), insbesondere Sattelzug, umfassend
mindestens zwei Teilfahrzeuge, nämlich ein straßengängiges Zugfahrzeug (12) und ein mit dem Zugfahrzeug (12) kuppelbares straßengängiges Nachlauffahrzeug (24; 24'), und
eine Mehrzahl Versorgungsleitungen (70a1/70b1, 70a2/70b2,70a3/70b3,70a4/70b4) zwischen den beiden Teilfahrzeugen,
wobei jede der Versorgungsleitungen eine Leitungskupplung (72a1/72b1,72a2/72b2,72a3/72b3) mit einer zugfahrzeugseitigen (im folgenden kurz: zugseitigen) Leitungskupplungshälfte (72a1,72a2,72a3) und einer nachlauffahrzeugseitigen (im folgenden kurz: nachlaufseitigen) Leitungskupplungshälfte (72b1,72b2,72b3) aufweist,
wobei vorzugsweise eine Mehrzahl der Leitungskupplungen (72a1/72b1,72a2/72b2,72a3/72b3), möglicherweise alle Leitungskupplungen, in einer Vielfachkupplung (68) zusammengefaßt sind in der Weise, daß jeweils die zugseitigen Leitungskupplungshälften (72a1,72a2,72a3) in einer zugseitigen Vielfachkupplungshälfte (68a) und die nachlaufseitigen Leitungskupplungshälften (72b1,72b2, 72b3) in einer nachlaufseitigen Vielfachkupplungshälfte (68b) zusammengefaßt sind,
**dadurch gekennzeichnet**,
daß den Leitungskupplungshälften (72a1,72b1,72a2, 72b2,72a3,72b3) mindestens einer Leitungskupplung (72a1/72b1,72a2/72b2,72a3/72b3) ein Kraftgerät (74) mit je einem Eingriffsteil (74a,74b) für die beiden Leitungskupplungshälften zugeordnet ist,
wobei die Eingriffsteile (74a,74b) nach Einstellung der Leitungskupplungshälften in eine Kupplungsvorbereitungsstellung in gegenseitigen Kraftübertragungseingriff (Figur 8) zu bringen sind und mindestens eines (74a) dieser Eingriffsteile gegenüber der zugehörigen Leitungskupplungshälfte (72a1,72a2,72a3) verstellbar ist, so daß nach Herstellung des Kraftübertragungseingriffs bei nachfolgender Verstellung des mindestens einen Eingriffsteils (74a) gegenüber der ihm zugehörigen Leitungskupplungshälfte (72a1,72a2,72a3) zwangsläufig eine Relativbewegung zwischen den beiden Leitungskupplungshälften (72a1,72b1,72a2,72b2,72a3,72b3) in einer Kupplungsrichtung (A) im Sinne einer Überführung dieser Leitungskupplungshälften in einen Kupplungszustand (Figur 9) eintritt.

2. Schleppzug nach Anspruch 1, insbesondere Sattelzug,
**dadurch gekennzeichnet**,
daß bei Zusammenfassung einer Mehrzahl von Leitungskupplungen (72a1/72b1,72a2/72b2,72a3/72b3) zu einer Vielfachkupplung (68) die jeweils ein und demselben Teilfahrzeug (12 bzw. 24) Zugehörigen Leitungskupplungshälften (72a1,72a2,72a3 bzw. 72b1,72b2,72b3) auf einem gemeinsamen Kupplungshälftenträger (68a bzw. 68b) angeordnet sind und
daß jeweils mindestens ein Eingriffsteil (74a bzw. 74b) an den beiden Kupplungshälftenträgern (68a bzw. 68b) angeordnet ist.

3. Schleppzug nach Anspruch 1 oder 2, insbesondere Sattelzug, **dadurch gekennzeichnet**,
daß die beiden Leitungskupplungshälften (72a1,72b1, 72a2,72b2,72a3,72b3) als Steckkupplungshälften ausgebildet sind und
daß das mindestens eine Eingriffsteil (74a) gegenüber der zugehörigen Leitungskupplungshälfte (72a1, 72a2,72a3) in Steckrichtung verstellbar ist.

4. Schleppzug nach einem der Ansprüche 1 bis 3, insbesondere Sattelzug, **dadurch gekennzeichnet**,
daß eine Betätigungseinrichtung (92) für das verstellbare Eingriffsteil (74a) an einer der Leitungskupplungshälften (72a1,72a2,72a3) oder einem Kupplungshälftenträger (68a) gelagert ist.

5. Schleppzug nach Anspruch 4, insbesondere Sattelzug,
**dadurch gekennzeichnet**,
daß die Betätigungseinrichtung (92) Kraftübersetzungsmittel (94) aufweist, so daß ein größerer Betätigungsweg eines Handbetätigungselements (92a) der Betätigungseinrichtung (92) einen kleineren Stellweg zwischen den beiden Leitungskupplungshälften (72a1,72b1, 72a2,72b2,72a3,72b3) erzeugt.

6. Schleppzug nach Anspruch 4 oder 5, insbesondere Sattelzug, **dadurch gekennzeichnet**,
daß die Betätigungseinrichtung (92a) in einem ersten Abschnitt eines Betätigungswegs den Kraftübertragungseingriff zwischen den beiden Leitungskupplungshälften (72a1,72b1,72a2,72b2,72a3,72b3) herstellt und in einem zweiten Abschnitt des Betätigungswegs die Relativverstellung zwischen den beiden Leitungskupplungshälften im Sinne der Überführung dieser Leitungskupplungshälften in den Kupplungszustand (Figur 9) bewirkt.

7. Schleppzug nach einem der Ansprüche 1 bis 6, insbesondere Sattelzug, **dadurch gekennzeichnet**,
daß das verstellbare Eingriffsteil (74a) an der zugseitigen Leitungskupplungshälfte (72a1,72a2,72a3) vorgesehen ist.

8. Schleppzug nach einem der Ansprüche 1 bis 7, insbesondere Sattelzug, **dadurch gekennzeichnet**,
daß das verstellbare Eingriffsteil (74a) ein Steuerelement (80) umfaßt, das in einem Führungselement (82) in der Kupplungsrichtung (A) verschiebbar geführt ist, wobei das Führungselement (82) seinerseits an der zugeordneten Leitungskupplungshälfte (72a1,72a2,72a3) bzw. dem Kupplungshälftenträger (68a) in der Kupplungsrichtung (A) verschiebbar angeordnet ist,
daß das Steuerelement (80) ferner eine zur Kupplungsrichtung (A) im, vorzugsweise spitzen, Winkel verlaufende Steuerfläche (80a) aufweist, und
daß das verstellbare Eingriffsteil (74a) ferner wenigstens einen Zugeingriffskörper (90) umfaßt, der an dem Führungselement (82) in einer zur Kupplungsrichtung (A) im wesentlichen senkrecht verlaufenden Richtung beweglich angeordnet ist,
wobei die Steuerfläche (80a) in einem ersten Abschnitt eines Betätigungswegs der Betätigungseinrichtung (92) auf den Zugeingriffskörper (90) einwirkt, so daß dieser zur Herstellung des Kraftübertragungseingriffs zwischen den beiden Leitungskupplungshälften (72a1,72b1,72a2,72b2,72a3,72b3) eine am anderen Eingriffsteil (74b) ausgebildete Hinterschneidung (74b4) hintergreift und
wobei das Steuerelement (80) ferner in einem zweiten Abschnitt des Betätigungswegs der Betätigungseinrichtung (92) das Führungselement (82) mit dem Zugeingriffskörper (90) und somit das andere Eingriffsteil (74b) in den Kupplungszustand (Figur 9) überführt.

9. Schleppzug nach einem der Ansprüche 1 bis 8, insbesondere Sattelzug, **dadurch gekennzeichnet**,
daß eine der Leitungskupplungshälften bzw. ein Kupplungshälftenträger, vorzugsweise die nachlaufseitige Leitungskupplungshälfte (72b1,72b2,72b3) bzw. ein nachlaufseitiger Kupplungshälftenträger (68b), fest an dem entsprechenden Teilfahrzeug (24) angebracht oder an diesem betriebsmäßig feststellbar ist.

10. Schleppzug nach einem der Ansprüche 1 bis 9, insbesondere Sattelzug, **dadurch gekennzeichnet**,
daß die Eingriffsteile (74a,74b) im Betrieb im Sinne einer Sicherung des Kupplungszustands zwischen den beiden Leitungskupplungshälften (72a1,72b1,72a2,72b2,72a3, 72b3) in Eingriff stehen.

11. Schleppzug nach Anspruch 10, insbesondere Sattelzug,
**dadurch gekennzeichnet**,
daß die Leitungskupplungshälften (72a1,72b1,72a2, 72b2,72a3,72b3) im Kupplungszustand durch zusätzliche Sicherungsmittel (92c/84c) gesichert sind.

12. Schleppzug nach einem der Ansprüche 1 bis 11, insbesondere Sattelzug, **dadurch gekennzeichnet**,
daß von den Leitungskupplungshälften mindestens eine (72a1,72a2,72a3) zur Herstellung der Kupplungsvorbereitungsstellung von Hand führungsfrei beweglich ist.

13. Schleppzug nach Anspruch 12, insbesondere Sattelzug,
**dadurch gekennzeichnet**,
daß von den beiden Leitungskupplungshälften die eine (72b1,72b2,72b3) an einem Teilfahrzeug (24) festgestellt oder betriebsmäßig feststellbar ist und die andere Leitungskupplungshälfte (72a1,72a2,72a3) an die eine (72b1,72b2,72b3) führungsfrei in die Kupplungsvorbereitungsstellung annäherbar ist.

14. Schleppzug, insbesondere Sattelzug, umfassend
mindestens zwei Teilfahrzeuge, nämlich ein straßengängiges Zugfahrzeug (12) und ein mit dem Zugfahrzeug (12) kuppelbares straßengängiges Nachlauffahrzeug (24), und
eine Mehrzahl Versorgungsleitungen (470a1/470b1, 470a2/470b2,470a3/470b3,470a4/470b4;570a1/570b1, 570a2/570b2,570a3/570b3,570a4/570b4) zwischen den beiden Teilfahrzeugen,
wobei jede der Versorgungsleitungen eine Leitungskupplung (472a1/472b1,472a2/472b2,472a3/472b3; 572a1/572b1,572a2/572b2,572a3/572b3) mit einer zugfahrzeugseitigen (im folgenden kurz: zugseitigen) Leitungskupplungshälfte (472a1,472a2,472a3; 572a1, 572a2,572a3) und einer nachlauffahrzeugseitigen (im folgenden kurz: nachlaufseitigen) Leitungskupplungshälfte (472b1,472b2,472b3; 572b1,572b2,572b3) aufweist,
wobei eine Mehrzahl der Leitungskupplungen, vorzugsweise alle Leitungskupplungen, in einer Vielfachkupplung (468;568) zusammengefaßt sind in der Weise, daß jeweils die zugseitigen Leitungskupplungshälften in einer zugseitigen Vielfachkupplungshälfte (468a;568a) und die nachlaufseitigen Leitungskupplungshälften in einer nachlaufseitigen Vielfachkupplungshälfte (468b; 568b) zusammengefaßt sind,
nach einem der Ansprüche 1 bis 13,
**dadurch gekennzeichnet**,
daß die Leitungskupplungshälften (472a1-472a3 bzw. 472b1-472b3; 572a1-572a3 bzw. 572b1-572b3) mindestens einer Vielfachkupplungshälfte (468a bzw. 468b; 568a bzw. 568b) über flexible Zwischenleitungen (470a1-470a4 bzw. 470b1-470b4; 570a1-570a4 bzw. 570b1-570b4) und Einzelschnellverbindungen (471a1-471a3 bzw. 473b1-473b3; 565a1-565a3) an herkömmliche Einzelanschlüsse (469a1-469a3 bzw. 475b1-475b3; 572a1-572a3) des jeweiligen Teilfahrzeugs (12 bzw. 24) angeschlossen sind.

15. Schleppzug nach Anspruch 14, insbesondere Sattelzug,
**dadurch gekennzeichnet**,
daß die Einzelanschlüsse (469a1-469a3 bzw. 475b1-475b3) an dem jeweiligen Teilfahrzeug (12 bzw. 24) fest angeordnet sind und an die jeweiligen Schnellverbindungen (471a1-471a3 bzw. 473b1-473b3) angepaßt sind.

16. Schleppzug nach Anspruch 14, insbesondere Sattelzug,
**dadurch gekennzeichnet**,
daß die flexiblen Zwischenleitungen (570a1-570a4) mit festen Versorgungsstellen (567) des jeweiligen Teilfahrzeugs (12) in betriebsmäßig bleibender Verbindung stehen und über die jeweiligen Schnellverbindungen (565a1-565a3) an die zugehörigen Leitungskupplungshälften (572a1,572a2,572a3) angeschlossen sind.

17. Schleppzug, insbesondere Sattelzug, umfassend
mindestens zwei Teilfahrzeuge, nämlich ein straßengängiges Zugfahrzeug (12) und ein mit dem Zugfahrzeug (12) kuppelbares straßengängiges Nachlauffahrzeug (24), und
eine Mehrzahl Versorgungsleitungen (570a1/570b1, 570a2/570b2,570a3/570b3,570a4/570b4) zwischen den beiden Teilfahrzeugen,
wobei jede der Versorgungsleitungen eine Leitungskupplung (572a1/572b1,572a2/572b2,572a3/572b3) mit einer zugfahrzeugseitigen (im folgenden kurz: zugseitigen) Leitungskupplungshälfte (572a1,572a2,572a3) und einer nachlauffahrzeugseitigen (im folgenden kurz: nachlaufseitigen) Leitungskupplungshälfte (572b1,572b2, 572b3) aufweist,
wobei eine Mehrzahl der Leitungskupplungen, vorzugsweise alle Leitungskupplungen, in einer Vielfachkupplung (568) zusammengefaßt sind in der Weise, daß jeweils die zugseitigen Leitungskupplungshälften in einer zugseitigen Vielfachkupplungshälfte (568a) und die nachlaufseitigen Leitungskupplungshälften in einer nachlaufseitigen Vielfachkupplungshälfte (568b) zusammengefaßt sind,
nach einem der Ansprüche 1 bis 13,
**dadurch gekennzeichnet**,
daß die Leitungskupplungshälften (572a1-572a3) mindestens einer Vielfachkupplungshälfte (568a) über flexible Zwischenleitungen (570a1-570a4) und Einzelschnellverbindungen (565a1-565a4) in bleibender Verbindung mit festen Anschlußstellen (bei 567) an dem jeweiligen Teilfahrzeug (12) stehen und
daß an diesem zugehörigen Teilfahrzeug (12) zusätzlich herkömmliche Einzelanschlüsse (569a1-569a3) vorgesehen sind.

18. Schleppzug nach einem der Ansprüche 1 bis 17, insbesondere Sattelzug, **dadurch gekennzeichnet**,
daß an mindestens einem (12) der Teilfahrzeuge eine Parkvorrichtung (498;598) zur Aufnahme einer zugehörigen Vielfachkupplungshälfte (468a;568a) angeordnet ist, welche das Parken dieser Vielfachkupplungshälfte (468a; 568a) erlaubt, während deren Leitungskupplungshälften (472a1-472a3;572a1-572a3) über flexible Zwischenleitungen (470a1-470a4;570a1-570a4) mit Versorgungsstellen (über 469a1-469a3; bei 567) des jeweiligen Teilfahrzeugs (12) in Verbindung stehen.

19. Schleppzug nach Anspruch 18, insbesondere Sattelzug,
**dadurch gekennzeichnet**,
daß die Parkvorrichtung (498;598) mit Schutzmitteln für die Leitungskupplungshälften (472a1-472a3;572a1-572a3) der Vielfachkupplungshälfte (468a;568a) ausgeführt ist, welche beim Einparken der Vielfachkupplungshälfte (468a;568a) in die Parkvorrichtung (498;598) zwangsläufig wirksam werden.

20. Schleppzug nach einem der Ansprüche 1 bis 19, insbesondere Sattelzug, **dadurch gekennzeichnet**,
daß eine an einem Teilfahrzeug (24) fest montierte Vielfachkupplungshälfte (468b;568b) durch am zugehörigen Teilfahrzeug (24) angebrachte Schutzmittel (496a; 596a) abdeckbar ist.

21. Schleppzug nach einem der Ansprüche 1 bis 20, insbesondere Sattelzug, **dadurch gekennzeichnet**,
daß eine für Druckluftversorgung ausgebildete Leitungskupplungshälfte mit einem Rückschlagventil ausgeführt ist.

22. Schleppzug nach einem der Ansprüche 1 bis 21, insbesondere Sattelzug, **gekennzeichnet durch** ein Straßengängiges Teilfahrzeug (12;24), welches durch lösbare mechanische Kupplungsmittel (26,28) mit einem gewählten straßengängigen Anschlußteilfahrzeug (24;12) aus einer Mehrzahl von Anschlußteilfahrzeugen zu dem Schleppzug zusammenstellbar ist,
wobei das Teilfahrzeug (12;24) und das jeweilige Anschlußteilfahrzeug (24;12) durch eine Mehrzahl von flexiblen Versorgungsleitungen (470a1/470b1-470a4/470b4,570a1/570b1-570a4/570b4) für unterschiedliche Versorgungsfunktionen, wie Energie- und Signalübertragung, miteinander verbindbar sind,
wobei weiter das Teilfahrzeug (12;24) ausgerüstet ist
a) mit einer Gruppe von teilfahrzeug-seitigen Leitungsverbindungshälften (469a1-469a3,569a1-569a3; 475b1-475b3,575b1-575b3), welche im Verlauf des betriebsmäßigen Zusammenstellens bzw. Auflösens des Schleppzugs mit einer entsprechenden Gruppe von anschlußteilfahrzeug-seitigen Leitungsverbindungshälften (475b1-475b3,575b1-575b3; 469a1-469a3,569a1-569a3) durch individuelle Schnellkupplungs- bzw. -trennungsvorgänge schnell verbindbar bzw. lösbar sind, um respektive Leitungsverbindungen herzustellen bzw. zu trennen, und
b) mit einer Gruppe von teilfahrzeug-seitigen Leitungskupplungshälften (472a1-472a3,572a1-572a3; 472b1-472b3,572b1-572b3), welche zu einer teilfahrzeug-seitigen Vielfachkupplungshälfteneinheit (468a,568a) baulich zusammengefaßt sind, derart daß sie mit einer entsprechenden Gruppe von anschlußteilfahrzeug-seitigen Leitungskupplungshälften (472b1-472b3,572b1-572b3; 472a1-472a3,572a1-572a3), die zu einer anschlußteilfahrzeug-seitigen Vielfachkupplungshälfteneinheit (468b,568b) baulich zusammengefaßt sind, in einem gemeinsamen Schnellkupplungs- bzw. -trennungsvorgang zu einer Vielfachkupplungseinheit (468,568) gekuppelt bzw. ausgehend von einer Vielfachkupplungseinheit (468,568) getrennt werden können,
wobei weiter jeweils identischen Versorgungsfunktionen sowohl eine teilfahrzeug-seitige Leitungsverbindungshälfte (469a1-469a3,569a1-569a3; 475b1-475b3, 575b1-575b3) als auch eine teilfahrzeug-seitige Leitungskupplungshälfte (472a1-472a3,572a1-572a3; 472b1-472b3,572b1-572b3) zugeordnet ist, und
wobei sowohl die Gruppe von Leitungsverbindungshälften (469a1-469a3,569a1-569a3; 475b1-475b3,575b1-575b3) als auch die Vielfachkupplungshälfteneinheit (468a,568a; 468b,568b) des Teilfahrzeugs (12;24) zu einfachem Zugriff für einen betriebsmäßigen Kupplungs- bzw. Trennungsvorgang zwischen dem Teilfahrzeug (12; 24) und einem respektiven Anschlußteilfahrzeug (24;12) außen am Teilfahrzeug (12;24) angeordnet sind.

23. Schleppzug nach Anspruch 22, insbesondere Sattelzug, **dadurch gekennzeichnet**, daß wenigstens eine der teilfahrzeug-seitigen Leitungskupplungshälften (572b1-572b3) zu der der gleichen Versorgungsfunktion zugeordneten teilfahrzeug-seitigen Leitungsverbindungshälfte (575b1-575b3) über einen mit dem Teilfahrzeug (24) ständig verbundenen Versorgungsleitungsabschnitt (570b1-570b4) ständig parallel angeordnet ist,
wobei sowohl die Gruppe von Leitungsverbindungshälften (575b1-575b3) als auch die Vielfachkupplungshälfteneinheit (568b) zum betriebsmäßigen Kuppeln des Teilfahrzeugs (24) mit dem gewählten Anschlußteilfahrzeug (12) wahlweise verfügbar sind.

24. Schleppzug nach Anspruch 22, insbesondere Sattelzug, **dadurch gekennzeichnet**, daß wenigstens eine der teilfahrzeug-seitigen Leitungskupplungshälften (572a1-572a3) zu der der gleichen Versorgungsfunktion zugeordneten teilfahrzeug-seitigen Leitungsverbindungshälfte (569a1-569a3) über einen mit dem Teilfahrzeug (12) ständig verbundenen Versorgungsleitungsabschnitt (570a1-570a4) und eine Einzelschnellverbindung (565a1-565a3) lösbar parallel angeordnet ist.

25. Schleppzug nach Anspruch 22, insbesondere Sattelzug, **dadurch gekennzeichnet**, daß wenigstens eine der teilfahrzeug-seitigen Leitungskupplungshälften (472a1-472a3; 472b1-472b3) zu der der gleichen Versorgungsfunktion zugeordneten teilfahrzeugseitigen Leitungsverbindungshälfte (469a1-469a3; 475b1-475b3) über einen mit dieser teilfahrzeug-seitigen Leitungsverbindungshälfte (469a1-469a3; 475b1-475b3) mittels einer Einzelschnellverbindung (471al-471a3) lösbar verbindbaren Versorgungsleitungsabschnitt (470a1-470a4; 470b1-470b4) lösbar in Reihe angeordnet ist.

## Claims

1. A tractor train (10), in particular an articulated train, comprising
at least two partial vehicles, namely a road-going tractor vehicle (12) and a road-going trailer vehicle (24, 24') which can be coupled with the tractor vehicle (12), and
a plurality of supply lines (70a1/70b1, 70a2/70b2, 70a3/70b3, 70a4/70b4) between the two partial vehicles,
each of the supply lines having a line coupling (72a1/72b1, 72a2/72b2, 72a3/72b3) with a line coupling half (72a1, 72a2, 72a3) on the tractor vehicle side (hereinafter shortly referred to as: tractor side) and a line coupling half (72b1, 72b2, 72b3) on the trailer vehicle side (hereinafter shortly referred to as: trailer side),
preferably a plurality of the line couplings (72a1/72b1, 72a2/72b2, 72a3/72b3), possibly all line couplings, being combined in a multiple coupling (68) in such a way that the respective line coupling halves (72a1, 72a2, 72a3) on the tractor side are combined in a multiple coupling half (68a) on the tractor side and the line coupling halves (72b1, 72b2, 72b3) on the trailer side are combined in a multiple coupling half (68b) on the trailer side,
**characterised**
in that a force device (74) having an engagement element (74a, 74b) for each of the two line coupling halves is allocated to the line coupling halves (72a1, 72b1, 72a2, 72b2, 72a3, 72b3) of at least one line coupling (72a1/72b1, 72a2/72b2, 72a3/72b3),
wherein the engagement elements (74a, 74b) are to be brought into a mutual force transfer engagement (Fig. 8) after the line coupling halves have been brought into a ready-for-coupling position and wherein at least one (74a) of these engagement elements is adjustable with respect to the associated line coupling half (72a1, 72a2, 72a3) so that after establishing the force transfer engagement along with the subsequent displacement of the at least one engagement element (74a) with respect to the associated line coupling half (72a1, 72a2, 72a3) a forced relative movement occurs between the two line coupling halves (72a1, 72b1, 72a2, 72b2, 72a3, 72b3) in a coupling direction (A) in the sense of transferring these line coupling halves into the coupled state (Fig. 9).

2. A tractor train according to claim 1, in particular an articulated train,
characterised in that when a plurality of line couplings (72a1/72b1, 72a2/72b2, 72a3/72b3) is combined into a multiple coupling (68), the line coupling halves (72a1, 72a2, 72a3, or 72b1, 72b2, 72b3) which are each associated with one and the same partial vehicle (12 and 24, respectively) are disposed on a common coupling halves support (68a and 68b, respectively), and
in that at least one engagement element (74a and 74b, respectively) is disposed on each of the two coupling halves supports (68a and 68b, respectively).

3. A tractor train according to claim 1 or 2, in particular an articulated train,
characterised in that the two line coupling halves (72a1, 72b1, 72a2, 72b2, 72a3, 72b3) are designed as plug coupling halves, and
in that the at least one engagement element (74a) is adjustable in the direction of plugging with respect to the associated line coupling half (72a1, 72a2, 72a3).

4. A tractor train according to one of claims 1 to 3, in particular an articulated train,
characterised in that an actuating device (92) for the adjustable engagement element (74a) is seated on one of the line couplings halves (72a1, 72a2, 72a3) or on a coupling halves support (68a).

5. A tractor train according to claim 4, in particular an articulated train,
characterised in that the actuating device (92) has force transfer means (94) so that an increased actuation path of a manual actuating element (92a) of the engagement device (92) generates a lesser adjustment path between the two line coupling halves (72a1, 72b1, 72a2, 72b2, 72a3, 72b3).

6. A tractor train according to claim 4 or 5, in particular an articulated train,
characterised in that the actuating device (92a) provides the force transfer engagement between the two line coupling halves (72a1, 72b1, 72a2, 72b2, 72a3, 72b3) in a first section of the actuation path and, in a second section of the actuation path, causes the relative displacement between the two line coupling halves in the sense of bringing these line coupling halves into the coupled state (Fig. 9).

7. A tractor train according to one of claims 1 to 6, in particular an articulated train,
characterised in that the adjustable engagement element (74a) is provided on the line coupling half (72a1, 72a2, 72a3) on the tractor side.

8. A tractor train according to one of claims 1 to 7, in particular an articulated train,
characterised in that the adjustable engagement element (74a) comprises a control element (80) which is guided displaceably in the coupling direction (A) in a guide element (82), the guide element (82) itself being disposed displaceably in the coupling direction (A) on the associated line coupling half (72a1, 72a2, 72a3) and the coupling halves support (68a), respectively,
in that the control element (80) furthermore has a control surface (80a) extending at a preferably acute angle with respect to the coupling direction (A), and
in that the adjustable engagement element (74a) furthermore comprises at least one pull engagement body (90) which is disposed on the guide element (82) movable in a direction extending essentially perpendicularly to the coupling direction (A),
the control surface (80a) acting on the pull engagement body (90) in a first section of the actuation path of the actuating element (92) so that the latter engages an undercut (74b4) formed on the other engagement element (74b) for providing the force transfer engagement between the two line coupling halves (72a1, 72b1, 72a2, 72b2, 72c1, 72c3), and
furthermore, the control element (80) bringing the guide element (82) together with the pull engagement body (90), and thus the other engagement element (74b), into the coupled state (Fig. 9) in a second section of the actuation path of the actuating element (92).

9. A tractor train according to one of claims 1 to 8, in particular an articulated train,
characterised in that one of the line coupling halves and one of the coupling halves supports, respectively, preferably the line coupling half (72b1, 72b2, 72b3) on the trailer side and a coupling halves support (68b) on the trailer side, respectively, is fixedly attached to the respective partial vehicle (24) or can be operatingly fastened to it.

10. A tractor train according to one of claims 1 to 9, in particular an articulated train,
characterised in that the engagement elements (74a, 74b) are in engagement during operation in the sense of securing the coupled state between the two line coupling halves (72a1, 72b1, 72a2, 72b2, 72a3, 72b3).

11. A tractor train according to claim 10, in particular an articulated train,
characterised in that the line coupling halves (72a1, 72b1, 72a2, 72b2, 72a3, 72b3) are secured in the coupled state by additional securing means (92c/84c),

12. A tractor train according to one of claims 1 to 11, in particular an articulated train,
characterised in that at least one (72a1, 72a2, 72a3) of the line coupling halves is movable by hand unguided for establishing the ready-for-coupling position.

13. A tractor train according to claim 12, in particular an articulated train,
characterised in that one (72b1, 72b2, 72b3) of the two line coupling halves is fixed or operatingly fastened on a partial vehicle (24) and the other line coupling half (72a1, 72a2, 72a3) can be brought unguided close to the one (72b1, 72b2, 72b3) into the ready-for-coupling position.

14. A tractor train, in particular an articulated train, comprising
at least two partial vehicles, namely a road-going tractor vehicle (12) and a road-going trailer vehicle (24), which can be coupled with the tractor vehicle (12), and
a plurality of supply lines (470a1/470b1, 470a2/470b2, 470a3/470b3, 470a4/470b4; 570a1/570b1, 570a2/570b2, 570a3/570b3, 570a4/570b4) between the two partial vehicles,
each of the supply lines having a line coupling (472a1/472b1, 472a2/472b2, 472a3/472b3; 572a1/572b1, 572a2/572b2, 572a3/572b3) with a line coupling half (472a1, 472a2, 472a3; 572a1, 572a2, 572a3) on the tractor vehicle side (hereinafter shortly referred to as: tractor side) and a line coupling half (472b1, 472b2, 472b3; 572b1, 572b2, 572b3) on the trailer vehicle side (hereinafter shortly referred to as: trailer side),
a plurality of the line couplings, preferably all line couplings, being combined in a multiple coupling (468; 568) in such a way that the respective line coupling halves on the tractor side are combined in a multiple coupling half (468a; 568a) on the tractor side and the line coupling halves on the trailer side are combined in a multiple coupling half (468b; 568b) on the trailer side,
according to one of claims 1 to 13,
characterised in that the line coupling halves (472a1 - 472a3 and 472b1 - 472b3, respectively; 572a1 - 572a3 and 572b1 - 572b3, respectively) of at least one multiple coupling half (468a and 468b, respectively; 568a and 568b, respectively) are connected via flexible intermediate lines (470a1 - 470a4 and 470b1 - 470b4, respectively; 570a1 - 570a4 and 570b1 - 570b4, respectively) and individual quick-release connectors (471a1 - 471a3 and 473b1 - 473b3, respectively; 565a1 - 565a3) with the conventional individual connectors (469a1 - 469a3 and 475b1 - 475b3, respectively; 572a1 - 572a3) of the respective partial vehicle (12 and 24, respectively).

15. A tractor train according to claim 14, in particular an articulated train,
characterised in that the individual connectors (469a1 - 469a3 and 475b1 - 475b3, respectively) are fixedly disposed on the respective partial vehicle (12 and 24, respectively) and adapted to the respective quick-release connectors (471a1 - 471a3 and 473b1 - 473b3, respectively).

16. A tractor train according to claim 14, in particular an articulated train,
characterised in that the flexible intermediate lines (570a1 - 570a4) have an operatingly permanent connection with fixed supply points (567) of the respective partial vehicle (12) and are connected to the associated line coupling halves (572a1, 572a2, 572a3) via the respective quick-release connectors (565a1 - 565a3).

17. A tractor train, in particular an articulated train, comprising
at least two partial vehicles, namely a road-going tractor vehicle (12) and a road-going trailer vehicle (24), which can be coupled with the tractor vehicle (12), and
a plurality of supply lines (570a1/570b1, 570a2/570b2, 570a3/570b3, 570a4/570b4) between the two partial vehicles,
each of the supply lines having a line coupling (572a1/572b1, 572a2/572b2, 572a3/572b3) with a line coupling half (572a1, 572a2, 572a3) on the tractor vehicle side (hereinafter shortly referred to as: tractor side) and a line coupling half (572b1, 572b2, 572b3) on the trailer vehicle side (hereinafter shortly referred to as: trailer side),
a plurality of the line couplings, preferably all line couplings, being combined in a multiple coupling (568) in such a way that the respective line coupling halves on the tractor side are combined in a multiple coupling half (568a) on the tractor side and the line coupling halves on the trailer side are combined in a multiple coupling half (568b) on the trailer side,
according to one of claims 1 to 13,
characterised in that the line coupling halves (572a1 - 572a3) of at least one multiple coupling half (568a) are in permanent connection with fixed connecting points (at 567) on the respective partial vehicle (12) via flexible intermediate lines (570a1 - 570a4) and individual quick-release connectors (565a1 - 565a4), and
in that, additionally, conventional individual connections (569a1 - 569a3) are provided on this associated partial vehicle (12).

18. A tractor train according to one of claims 1 to 17, in particular an articulated train,
characterised in that a stowage device (498; 598) for receiving an associated multiple coupling half (468a; 568a) is disposed on at least one (12) of the partial vehicles, which permits stowage of this multiple coupling half (468a;568a), while its line coupling halves (472a1 - 472a3; 572a1 - 572a3) are in connection with supply points (via 469a1 - 469a3; at 567) of the respective partial vehicle (12) via flexible intermediate lines (470a1 - 470a4; 570a1 - 570a4).

19. A tractor train according to claim 18, in particular an articulated train,
characterised in that the stowage device (498; 598) is provided with protective means for the line coupling halves (472a1 - 472a3; 572a1 - 572a3) of the multiple coupling half (468a; 568a) which positively become effective when the multiple coupling half (468a; 568a) is stowed in the stowage device (498; 598).

20. A tractor train according to one of claims 1 to 19, in particular an articulated train,
characterised in that a multiple coupling half (468b; 568b) fixedly mounted on the partial vehicle (24) can be covered by protective means (496a; 596a) fixed on the associated partial vehicle (24).

21. A tractor train according to one of claims 1 to 20, in particular an articulated train,
characterised in that a line coupling half designed for compressed air supply is provided with a check valve.

22. A tractor train according to one of claims 1 to 21, in particular an articulated train,
characterised by a road-going partial vehicle (12; 24) which can be assembled by releasable mechanical coupling means (26, 28) with a road-going joint partial vehicle (24; 12) selected from a plurality of joint partial vehicles to form the tractor train,
the partial vehicle (12; 24) and the respective joint partial vehicle (24; 12) being connectable to each other by a plurality of flexible supply lines (470a1/470b1-470a4/470b4, 570a1/570b1-570a4/570b4) fulfilling different supply functions, such as energy and signal transfer,
furthermore, said partial vehicle (12; 24) being equipped
a) with a group of line connecting halves (469a1-469a3, 569a1-569a3; 475b1-475b3, 575b1-575b3) on the partial vehicle side which are adapted to be quickly connected with and disconnected from a corresponding group of line connecting halves (475b1-475b3, 575b1-575b3; 469a1-469a3, 569a1-569a3) on the joint partial vehicle side in the course of operational assembling and disassembling of the tractor train, respectively, by individual quick coupling and decoupling operations, respectively, to establish and interrupt respective line connections, respectively, and
b) with a group of line coupling halves (472a1-472a3, 572a1-572a3; 472b1-472b3, 572b1-572b3) on the partial vehicle side which are constructionally combined to form a multiple coupling half unit (468a, 568a) on the partial vehicle side such that they can be quickly coupled with a corresponding group of line coupling halves (472b1-472b3, 572b1-572b3; 472a1-472a3, 572a1-572a3) on the joint partial vehicle side which are constructionally combined to form a multiple coupling half unit (468b, 568b) on the joint partial vehicle side by a common quick coupling operation to establish a multiple coupling unit (468, 568) or rather such that they can be quickly decoupled, starting from a multiple coupling unit (468, 568), by a common quick decoupling operation,
furthermore, both a line connecting half (469a1-469a3, 569a1-569a3; 475b1-475b3, 575b1-575b3) on the partial vehicle side and a line coupling half (472a1-472a3, 572a1-572a3; 472b1-472b3, 572b1-572b3) on the partial vehicle side being allocated to respective identical supply functions, and
both said group of line connecting halves (469a1-469a3, 569a1-569a3; 475b1-475b3, 575b1-575b3) and said multiple coupling half unit (468a, 568a; 468b, 568b) of the partial vehicle (12; 24) being disposed externally on the partial vehicle (12; 24) for easy access for an operational coupling and decoupling operation, respectively, between the partial vehicle (12; 24) and a respective joint partial vehicle (24; 12).

23. A tractor train according to claim 22, in particular an articulated train,
characterised in that at least one of said line coupling halves (572b1-572b3) on the partial vehicle side is permanently connected in parallel with the line connecting half (575b1-575b3) on the partial vehicle side allocated to the same supply function via a respective supply line section (570b1-570b4) permanently connected with the partial vehicle (24),
both said group of line connecting halves (575b1-575b3) and said multiple coupling half unit (568b) being selectively available for operational coupling of the partial vehicle (24) with the selected joint partial vehicle (12).

24. A tractor train according to claim 22, in particular an articulated train,
characterised in that at least one of said line coupling halves (572a1-572a3) on the partial vehicle side is releasably connected in parallel with the line connecting half (569a1-569a3) on the partial vehicle side allocated to the same supply function via a supply line section (570a1-570a4) permanently connected with the partial vehicle (12) and by means of an individual quick connection (565a1-565a3).

25. A tractor train according to claim 22, in particular an articulated train,
characterised in that at least one of said line coupling halves (472a1-472a3; 472b1-472b3) on the partial vehicle side is releasably connected in series with the line connecting half (469a1-469a3; 475b1-475b3) on the partial vehicle side allocated to the same supply function via a supply line section (470a1-470a4; 470b1-470b4) releasably connectable with said line connecting half (469a1-469a3; 475b1-475b3) via an individual quick connection (471a1-471a3).

## Revendications

1. Train routier remorqué (10), en particulier semi-remorque, comportant
au moins deux véhicules élémentaires, à savoir un véhicule tracteur (12) routier et un véhicule tracté (24 ; 24') routier, susceptible d'être accouplé au véhicule tracteur (12) et
une pluralité de lignes d'alimentation (71a1/70b1, 70a2/70b2, 70a3/70b3, 70a4/70b4) entre les deux véhicules élémentaires, dans lequel chacune des lignes d'alimentation comporte un accouplement de ligne (72a1/72b1, 72a2/72b2, 72a3/72b3) avec une moitié d'accouplement de ligne (72a1, 72a2, 72a3) côté véhicule tracteur (en abrégé : côté traction) et une moitié d'accouplement de ligne (72b1, 72b2, 72b3) côté véhicule tracté (en abrégé : côté tracté),
dans lequel, de préférence, plusieurs des accouplements de ligne (72a1/72b1, 72a2/72b2, 72a3/72b3), éventuellement tous les accouplements de ligne, sont réunis dans un accouplement multiple (68) de manière que les moitiés d'accouplement de ligne côté traction (72a1, 72a2, 72a3) soient réunies dans une moitié d'accouplement multiple côté traction (68a) et les moitiés d'accouplement de ligne côté tracté (72b1, 72b2, 72b3) soient réunies dans une moitié d'accouplement multiple côté tracté (68b),
caractérisé
en ce qu'aux moitiés d'accouplement de ligne (72a1/72b1, 72a2/72b2, 72a3/72b3) d'au moins un accouplement de ligne (72a1/72b1, 72a2/72b2, 72a3/72b3) est associé un appareil énergétique (74) avec chacun une partie d'engagement (74a, 74b) pour les deux moitiés d'accouplement de ligne,
les parties d'engagement (74a, 74b) devant être amenées en engagement réciproque de transmission de force (figure 8), après réglage des moitiés d'accouplement de ligne dans une position de préparation d'accouplement, et l'une au moins (74a) de ces parties d'engagement étant réglable par rapport à la moitié d'accouplement de ligne (72a1, 72a2, 72a3) respective, ce qui fait qu'après réalisation de l'engagement de transmission de force, lors du réglage suivant d'au moins une partie d'engagement (74a) par rapport à la moitié d'accouplement de ligne (72a1, 72a2, 72a3) qui lui appartient, il se produit forcément un déplacement relatif entre les deux moitiés d'accouplement de ligne (72a1, 72b1, 72a2, 72b2, 72a3, 72b3) dans une direction d'accouplement (A), au sens d'un passage de ces moitiés d'accouplement de ligne dans un état accouplé (figure 9).

2. Train routier remorqué selon la revendication 1, en particulier semi-remorque, caractérisé
en ce que, dans le cas où plusieurs accouplements de ligne (72a1/72b1, 72a2/72b2, 72a3/72b3) sont réunis dans un accouplement multiple (68), les moitiés d'accouplement de ligne (72a1, 72a2, 72a3 resp. 72b1, 72b2, 72b3), appartenant à un même véhicule élémentaire (12 resp. 24), sont placées sur un support de moitié d'accouplement (68a resp. 68b) commun et
en ce qu'au moins une partie d'engagement (74a resp. 74b) est placée sur les deux supports de moitié d'accouplement (68a resp. 68b).

3. Train routier remorqué selon la revendication 1 ou 2, en particulier semi-remorque, caractérisé
en ce que les deux moitiés d'accouplement de ligne (72a1, 72b1, 72a2, 72b2, 72a3, 72b3) sont réalisées sous la forme de moitiés d'accouplement à enfichage et
en ce qu'au moins une partie d'engagement (74a) est réglable dans le sens de l'enfichage par rapport à la moitié d'accouplement de ligne (72a1, 72a2, 72a3) respective.

4. Train routier remorqué selon l'une des revendications 1 à 3, en particulier semi-remorque, caractérisé
en ce qu'un dispositif d'actionnement (92) pour la partie d'engagement réglable (74a) est montée sur l'une des moitiés d'accouplement de ligne (72a1, 72a2, 72a3) ou sur un support de moitié d'accouplement (68a).

5. Train routier remorqué selon la revendication 4, en particulier semi-remorque, caractérisé
en ce que le dispositif d'actionnement (92) comporte des moyens de multiplication de force (94), de sorte qu'une grande distance d'actionnement d'un élément d'actionnement manuel (92a) du dispositif d'actionnement (92) produit une petite distance de réglage entre les deux moitiés d'accouplement de ligne (72a1, 72b1, 72a2, 72b2, 72a3, 72b3).

6. Train routier remorqué selon la revendication 4 ou 5, en particulier semi-remorque, caractérisé
en ce que le dispositif d'actionnement (92a) réalise, dans une première portion d'un parcours d'actionnement, l'engagement de transmission de force entre les deux moitiés d'accouplement de ligne (72a1, 72b1, 72a2, 72b2, 72a3, 72b3) et produit, dans une seconde portion du parcours d'actionnement, le déplacement relatif entre les deux moitiés d'accouplement de ligne, au sens du passage de ces moitiés d'accouplement de ligne dans l'état accouplé (figure 9).

7. Train routier remorqué selon l'une des revendications 1 à 6, en particulier semi-remorque, caractérisé
en ce que la partie d'engagement réglable (74a) est prévue sur la moitié d'accouplement de ligne (72a1, 72a2, 72a3) côté traction.

8. Train routier remorqué selon l'une des revendications 1 à 7, en particulier semi-remorque, caractérisé
en ce que la partie d'engagement réglable (74a) comprend un élément de commande (80), qui est guidé coulissant dans un élément de guidage (82) dans la direction d'accouplement (A), l'élément de guidage (82) étant de son côté monté coulissant dans la direction d'accouplement (A) sur la moitié d'accouplement de ligne (72a1, 72a2, 72a3) associée ou sur le support de moitié d'accouplement (68a),
en ce que l'élément de commande (80) comprend en outre une surface de commande (80a) s'étendant sous un angle, de préférence aigu, par rapport à la direction d'accouplement (A), et
en ce que la partie d'engagement réglable (74a) comprend en outre au moins un corps d'engagement de traction (90), qui est monté sur l'élément de guidage (82), de manière déplaçable dans une direction sensiblement perpendiculaire à la direction d'accouplement (A),
la surface de commande (80a) agissant, dans une première portion d'un parcours d'actionnement du dispositif d'actionnement (92), sur un corps d'engagement de traction (90), de sorte que celui-ci passe derrière une contre-dépouille (74b4), formée sur l'autre partie d'engagement (74b), afin de réaliser l'engagement de transmission de force entre les deux moitiés d'accouplement de ligne (72a1, 72b1, 72a2, 72b2, 72a3, 72b3) et
l'élément de commande (80) faisant passer en outre, dans une seconde portion du parcours d'actionnement du dispositif d'actionnement (92), l'élément de guidage (82) avec le corps d'engagement de traction (90) et donc l'autre partie d'engagement (74b), dans l'état accouplé (figure 9).

9. Train routier remorqué selon l'une des revendications 1 à 8, en particulier semi-remorque, caractérisé
en ce que l'une des moitiés d'accouplement de ligne ou un support de moitié d'accouplement, de préférence la moitié d'accouplement de ligne côté tracté (72b1, 72b2, 72b3) ou un support de moitié d'accouplement côté tracté (68b), est monté fixe sur le véhicule élémentaire (24) correspondant ou peut être fixé sur celui-ci en service.

10. Train routier remorqué selon l'une des revendications 1 à 9, en particulier semi-remorque, caractérisé
en ce que les parties d'engagement (74a, 74b) sont en prise pendant le fonctionnement, au sens d'un blocage de l'état accouplé entre les deux moitiés d'accouplement de ligne (72a1, 72b1, 72a2, 72b2, 72a3, 72b3).

11. Train routier remorqué selon la revendication 10, en particulier semi-remorque, caractérisé
en ce que les moitiés d'accouplement (72a1, 72b1, 72a2, 72b2, 72a3, 72b3) sont bloquées dans l'état accouplé par des moyens de blocage (92c/84c) supplémentaires.

12. Train routier remorqué selon l'une des revendications 1 à 11, en particulier semi-remorque, caractérisé
en ce que l'une au moins (72a1, 72a2, 72a3) des moitiés d'accouplement de ligne est déplaçable manuellement, sans guidage, en vue de réaliser la position de préparation d'accouplement.

13. Train routier remorqué selon la revendication 12, en particulier semi-remorque, caractérisé
en ce que l'une (72b1, 72b2, 72b3) des deux moitiés d'accouplement de ligne est fixée ou peut être fixée en service sur un véhicule élémentaire (24) et l'autre moitié d'accouplement (72a1, 72a2, 72a3) peut être approchée, sans guidage d'une moitié d'accouplement de ligne (72b1, 72b2, 72b3), dans la position de préparation d'accouplement.

14. Train routier remorqué, en particulier semi-remorque, comportant
au moins deux véhicules élémentaires, à savoir un véhicule tracteur (12) routier et un véhicule tracté (24) routier, susceptible d'être accouplé au véhicule tracteur (12) et
une pluralité de lignes d'alimentation (470a1/470b1, 470a2/470b2, 470a3/470b3, 470a4/470b4 ; 570a1/570b1, 570a2/570b2, 570a3/570b3, 570a4, 570b4) entre les deux véhicules élémentaires,
dans lequel chacune des lignes d'alimentation comporte un accouplement de ligne (472a1/472b1, 472a2/472b2, 472a3/472b3 ; 572a1/572b1, 572a2/572b2, 572a3/572b3) avec une moitié d'accouplement de ligne (472a1, 472a2, 472a3 ; 572a1; 572a2, 572a3) côté véhicule tracteur (en abrégé : côté traction) et une moitié d'accouplement de ligne (472b1, 472b2, 472b3 ; 572b1; 572b2; 572b3) côté véhicule tracté (en abrégé : côté tracté),
dans lequel plusieurs des accouplements de ligne, de préférence tous les accouplements de ligne, sont réunis dans un accouplement multiple (468 ; 568) de manière que les moitiés d'accouplement de ligne côté traction soient réunies dans une moitié d'accouplement multiple côté traction (468a ; 568a) et les moitiés d'accouplement de ligne côté tracté soient réunies dans une moitié d'accouplement multiple côté tracté (468b ; 568b),
selon l'une des revendications 1 à 13, caractérisé
en ce que les moitiés d'accouplement de ligne (472a1 à 472a3 ou 472b1 à 472b3 ; 572a1 à 572a3 ou 572b1 à 572b3) d'au moins une moitié d'accouplement multiple (468a ou 468b ; 568a ou 568b) sont raccordées, par des lignes intermédiaires flexibles (470a1 à 470a4 ou 470b1 à 470b4 ; 570a1 à 570a4 à 570b1 à 570b4) et des raccords rapides individuels (471a1 à 471a3 ou 473b1 à 473b3 ; 565a1 à 469a3), à des raccords individuels classiques (469a1 à 469a3 ou 475b1 à 475b3 ; 572a1 à 572a3) du véhicule élémentaire (12 ou 24) respectif.

15. Train routier remorqué selon la revendication 14, en particulier semi-remorque, caractérisé
en ce que les raccords individuels (469a1 à 469a3 ou 475b1 à 475b3) sont placés fixes sur le véhicule élémentaire (12 ou 24) respectif et sont adaptés aux raccords rapides (471a1 à 471a3 ou 473b1 à 473b3) respectifs.

16. Train routier remorqué selon la revendication 14, en particulier semi-remorque, caractérisé
en ce que les lignes intermédiaires flexibles (570a1 à 570a4) sont en liaison fonctionnelle permanente avec des sources d'alimentation fixes (567) du véhicule élémentaire (12) respectif et sont raccordées, par les raccords rapides (565a1 à 565a3) respectifs, aux moitiés d'accouplement de ligne (572a1, 572a2, 572a3) respectives.

17. Train routier remorqué, en particulier semi-remorque, comportant
au moins deux véhicules élémentaires, à savoir un véhicule tracteur (12) routier et un véhicule tracté (24) routier, susceptible d'être accouplé au véhicule tracteur (12) et
une pluralité de lignes d'alimentation (570a1/570b1, 570a2/570b2, 570a3/570b3, 570a4/570b4) entre les deux véhicules élémentaires,
dans lequel chacune des lignes d'alimentation comporte un accouplement de ligne (572a1/572b1, 572a2/572b2, 572a3/572b3) avec une moitié d'accouplement de ligne (572a1; 572a2, 572a3) côté véhicule tracteur (en abrégé : côté traction) et une moitié d'accouplement de ligne (572b1; 572b2; 572b3) côté véhicule tracté (en abrégé : côté tracté),
dans lequel plusieurs des accouplements de ligne, de préférence tous les accouplements de ligne, sont réunis dans un accouplement multiple (568) de manière que les moitiés d'accouplement de ligne côté traction soient réunies dans une moitié d'accouplement multiple côté traction (568a) et les moitiés d'accouplement de ligne côté tracté soient réunies dans une moitié d'accouplement multiple côté tracté (568b), selon l'une des revendications 1 à 13, caractérisé
en ce que les moitiés d'accouplement de ligne (572a1 à 572a3) d'au moins une moitié d'accouplement multiple (568a), sont en liaison permanente, par des lignes intermédiaires flexibles (570a1 à 570a4) et des raccords rapides individuels (565a1 à 565a4), avec des points de branchement fixes (en 567), sur le véhicule élémentaire (12) respectif et
en ce que sur ce véhicule élémentaire (12) respectif sont prévus des raccords individuels classiques (569a à 569a3) supplémentaires.

18. Train routier remorqué selon l'une des revendications 1 à 17, en particulier semi-remorque, caractérisé
en ce que sur au moins l'un (12) des véhicules élémentaires, est monté un dispositif de parcage (498 ; 598) destiné à loger une moitié d'accouplement multiple (468a ; 568a) correspondante, qui autorise le parcage de cette moitié d'accouplement (468a ; 568a), tandis que ses moitiés d'accouplement de ligne (472a1 à 472a3 ; 572a1 à 572a3) sont en liaison, par des lignes intermédiaires flexibles (470a1 à 470a4 ; 570a1 à 570a4), avec des sources d'alimentation (par 469a1 à 469a3 ; en 567) du véhicule élémentaire (12) respectif.

19. Train routier remorqué selon la revendication 18, en particulier semi-remorque, caractérisé
en ce que le dispositif de parcage (498 ; 598) est réalisé avec des moyens de protection pour les moitiés d'accouplement de ligne (472a1 à 472a3 ; 572a1 à 572a3) de la moitié d'accouplement (468a ; 568a), qui opèrent forcément lors du parcage de la moitié d'accouplement multiple (468a ; 568a) dans le dispositif de parcage (498 ; 598).

20. Train routier remorqué selon l'une des revendications 1 à 19, en particulier semi-remorque, caractérisé
en ce qu'une moitié d'accouplement multiple (468b ; 568b) montée fixe sur un véhicule élémentaire (24), peut être recouverte par des moyens de protection (496a ; 596a) montés sur le véhicule élémentaire (24).

21. Train routier remorqué selon l'une des revendications 1 à 20, en particulier semi-remorque, caractérisé
en ce qu'une moitié d'accouplement de ligne, conçue pour une alimentation d'air comprimé, comporte un clapet anti-retour.

22. Train routier remorqué selon l'une des revendications 1 à 21, en particulier semi-remorque, caractérisé par un véhicule élémentaire routier (12 ; 24), qui peut être assemblé, par des moyens d'accouplement mécaniques (26, 28) amovibles, avec un véhicule élémentaire de raccord (24 ; 12) routier choisi parmi plusieurs véhicules élémentaires de raccord, pour former le train routier remorqué,
dans lequel le véhicule élémentaire (12 ; 24) et le véhicule élémentaire de raccord (24 ; 12) respectif peuvent être reliés entre eux par plusieurs lignes d'alimentation flexibles (470a1/470b1 à 470a4/470b4, 570a1/570b1 à 570a4/570b4) pour différentes fonctions d'alimentation, telles que transmission d'énergie et transmission de signaux, dans lequel en outre le véhicule élémentaire (12 ; 24) est équipé
a) d'un groupe de moitiés de liaison de ligne (469a1 à 469a3, 569a1 à 569a3 ; 475b1 à 475b3, 575b1 à 575b3) côté véhicule élémentaire, qui au cours de l'assemblage fonctionnel ou de la séparation du train routier remorqué, peuvent être reliées ou séparées rapidement, par des opérations d'accouplement ou de séparation rapides, avec un groupe correspondant de moitiés de liaison de ligne (475b1 à 475b3, 575b1 à 575b3 ; 469a1 à 469a3, 569a1 à 569a3) côté véhicule élémentaire de raccord, afin de réaliser des liaisons de ligne respectives ou de les supprimer et
b) d'un groupe de moitiés d'accouplement de ligne (472a1 à 472a3, 572a1 à 572a3 ; 472b1 à 472b3, 572b1 à 572b3), qui sont réunies de par la construction en une unité de moitié d'accouplement multiple (468a, 568a) côté véhicule élémentaire, de telle sorte qu'avec un groupe correspondant de moitiés d'accouplement de ligne (472b1 à 472b3, 572b1 à 572b3 ; 472a1 à 472a3, 572a1 à 572a3) côté véhicule élémentaire de raccord, qui sont réunies de par la construction en une unité de moitié d'accouplement multiple (468b, 568b) côté véhicule élémentaire de raccord, elles peuvent, en une opération commune d'accouplement rapide ou de séparation rapide, être accouplées pour former une unité d'accouplement multiple (468, 568) ou, partant d'une unité d'accouplement multiple (468, 568), peuvent être séparées,
dans lequel en outre à des fonctions d'alimentation identiques sont affectées aussi bien une moitié de liaison de ligne (469a1 à 469a3, 569a1 à 569a3 ; 475b1 à 475b3; 575b1 à 575b3) côté véhicule élémentaire qu'une moitié d'accouplement de ligne (472a1 à 472a3, 572a1 à 572a3 ; 472b1 à 472b3, 572b1 à 572b3) côté véhicule élémentaire, et
dans lequel aussi bien le groupe de moitiés de liaison de ligne (469a1 à 469a3, 569a1 à 569a3 ; 475b1 à 475b3, 575b1 à 575b3) que l'unité de moitiés d'accouplement multiple (468a, 568a ; 468b, 568b) du véhicule élémentaire (12 ; 24) sont placées entre le véhicule élémentaire (12 ; 24) et un véhicule élémentaire de raccord (24 ; 12) respectif à l'extérieur du véhicule élémentaire (12 ; 24), pour simplifier l'accès en vue d'une opération d'accouplement ou de séparation fonctionnelle.

23. Train routier remorqué selon la revendication 22, en particulier semi-remorque, caractérisé en ce qu'au moins l'une des moitiés d'accouplement de ligne (572b1 à 572b3) côté véhicule élémentaire est constamment montée en parallèle à la moitié de liaison de ligne (575b1 à 575b3) côté véhicule élémentaire affectée à la même fonction d'alimentation, par une portion de ligne d'alimentation (570b1 à 570b4), reliée en permanence au véhicule élémentaire (24),
dans lequel aussi bien le groupe de moitiés de liaison de ligne (575b1 à 575b3) que l'unité de moitiés d'accouplement multiple (568b) sont disponibles au choix, en vue de l'accouplement fonctionnel du véhicule élémentaire (24) avec le véhicule élémentaire de raccord (12) choisi.

24. Train routier remorqué selon la revendication 22, en particulier semi-remorque, caractérisé en ce qu'au moins l'une des moitiés d'accouplement de ligne (572a1 à 572a3) côté véhicule élémentaire est montée en parallèle, de manière amovible, à la moitié de liaison de ligne (569a1 à 569a3) côté véhicule élémentaire, affectée à la même fonction d'alimentation, par une portion de ligne d'alimentation (570a1 à 570a4) reliée en permanence au véhicule élémentaire (12) et par un raccord rapide individuel (565a1 à 565a3).

25. Train routier remorqué selon la revendication 22, en particulier semi-remorque, caractérisé en ce qu'au moins l'une des moitiés d'accouplement de ligne (472a1 à 472a3 ; 472b1 à 472b3), côté véhicule élémentaire, est montée en série, de manière amovible, avec la moitié de liaison de ligne (469a1 à 469a3 ; 475b1 à 475b3) côté véhicule élémentaire, affectée à la même fonction d'alimentation, par une portion de ligne d'alimentation (470a1 à 470a4 ; 470b1 à 470b4), pouvant être reliée de manière amovible avec cette moitié de liaison de ligne (469a1 à 469a3 ; 475b1 à 475b3), côté véhicule élémentaire, au moyen d'un raccord rapide individuel (471a1 à 471a3).
